# EUROPEAN PATENT SPECIFICATION

(11) **EP 4 429 265 B1**
(45) Date of publication and mention of the grant of the patent: **30.09.2026**
(21) Application number: 23759242.3
(22) Date of filing: 23.02.2023
(51) Int. Cl.: H04Q 11/00

(54) **OPTICAL DISTRIBUTION NETWORK DEVICE AND SIGNAL PROCESSING METHOD**
OPTISCHE VERTEILUNGSNETZWERKVORRICHTUNG UND SIGNALVERARBEITUNGSVERFAHREN
DISPOSITIF DE RÉSEAU DE DISTRIBUTION OPTIQUE ET PROCÉDÉ DE TRAITEMENT DE SIGNAL

(30) Priority: 23.02.2022 CN 202210170122
(43) Date of publication of application: 11.09.2024
(73) Proprietor: Huawei Technologies Co., Ltd., Shenzhen, Guangdong 518129 (CN)
(72) Inventor: YE, Zhicheng, Shenzhen, Guangdong 518129 (CN); XU, Benbo, Shenzhen, Guangdong 518129 (CN); ZHENG, Zongzhao, Shenzhen, Guangdong 518129 (CN); CHANG, Tianhai, Shenzhen, Guangdong 518129 (CN)
(74) Representative: Pfenning, Meinig & Partner mbB
(86) International application number: PCT/CN2023/077920
(87) International publication number: WO 2023/160620

(56) References cited:
- WO-A1-2021/077890
- CN-A- 101 854 208
- CN-A- 101 944 949
- CN-A- 103 686 472
- CN-A- 113 347 513
- CN-B- 106 936 634
- "Access, Terminals, Transmission and Multiplexing (ATTM); Optical Distribution Network (ODN) Quick Construction and Digitalization", vol. ATTM AT2, no. V1.1.1, 4 August 2021 (2021-08-04), pages 1 - 25, XP014399806, Retrieved from the Internet <URL:http://www.etsi.org/deliver/etsi_tr/103700_103799/103775/01.01.01_60/tr_103775v010101p.pdf> [retrieved on 20210804]
- ZHONGYI WANG ZTE CORPORATION CHINA XIATAO HUANG ZTE CORPORATION CHINA YI JIANG ZTE CORPORATION CHINA: "Port recognition for ODN visualization;C0974", vol. 2/15, 17 June 2024 (2024-06-17), pages 1 - 3, XP044393368, Retrieved from the Internet <URL:https://www-api.itu.int/ifa/t/2022/sg15/docs/c/ties/T22-SG15-C-0974!!MSW-E.docx> [retrieved on 20240617]

## Description

This application claims priority to Chinese Patent Application No. 202210170122.X, filed with the China National Intellectual Property Administration on February 23, 2022 and entitled "OPTICAL DISTRIBUTION NETWORK APPARATUS AND SIGNAL PROCESSING METHOD".

### TECHNICAL FIELD

Embodiments of this application relate to the signal processing field, and in particular, to an optical distribution network apparatus and a signal processing method.

### BACKGROUND

In a passive optical network (passive optical network, PON) system, an OLT transmits one downstream optical signal to a plurality of optical network units (optical network units, ONUs) through power splitting and transmission of the downstream optical signal performed by an optical distribution network (optical distribution network, ODN) apparatus, so that one-to-many optical interconnection is implemented.

In the PON system, the ODN apparatus includes a plurality of optical splitters, and transmits, through power splitting on an optical signal performed by a plurality of optical splitters with a fixed split ratio and transmission in an optical cable, an optical signal sent by one optical line terminal OLT to the plurality of ONUs. Specifically, for example, one PON network includes four ODN apparatuses. Each ODN apparatus has one input port and nine output ports. Four ODN apparatuses are sequentially connected in series, one of nine output ports of an optical splitter at first three levels is connected to an input port of a next-level optical splitter, and other output ports are connected to eight ONUs. In this way, a 1:32 PON system is formed. The optical splitter at the first three levels distributes, according to a fixed split ratio of 7:3, 70% optical energy of a received optical signal to the next-level optical splitter, and 30% optical energy to remaining eight output ports connected to the ONUs. In this way, it is ensured that an optical signal output by a last-level optical splitter meets a requirement of a connected ONU.

In a conventional technology, the ODN apparatus only transmits, through power splitting and transmission in the optical cable, the optical signal sent by the OLT to the plurality of ONUs, but the OLT cannot determine network topology information in an entire PON network. Document "Access, Terminals, Transmission and Multiplexing (ATTM); Optical Distribution Network (ODN) Quick Construction and Digitalization" published on August 4, 2021 in ETSI TECHNICAL REPORT, EUROPEAN TELECOMMUNICATIONS STANDARDS INSTITUTE (ETSI), 650, ROUTE DES LUCIOLES ; F-06921 SOPHIA-ANTIPOLIS ; FRANCE 1 describes the ODN quick construction and digital management solutions, which enable the carriers to improve the fibre deployment efficiency, achieve digital resource management, and consequently improve the operation and management efficiency. D1 also describes the system structure of the digitalized quick ODN and the general requirement of preconnectorized ODN product modules, digital labels, intelligent management terminals and intelligent optical distribution network management systems. The document is mainly based on intelligent optical distribution networks that can collect the ODN information through a smart terminal device (such as a smart phone with the ODN management application) and the digital label in the ODN device (see Figure 4-1, Figure 4-3, Figure 6-1 and 6. Digitalized ODN system). CN106936634B provides a wireless management system for an active scenario, where the system includes an intelligent ODN network management system and an intelligent ODN device.

### SUMMARY

Embodiments of this application provide an optical distribution network apparatus and a signal processing method, to transmit information such as identification information of a plurality of ONUs and port identification information to an OLT by using the ODN apparatus. The information such as the identification information of the plurality of ONUs and the port identification information is used by the OLT to determine network topology information of a PON system.

According to a first aspect, an embodiment of this application provides an optical distribution network ODN apparatus. The ODN apparatus includes an optical splitting module, a control chip, a first optical port, a second optical port, and a plurality of third photoelectric composite ports, where the optical splitting module is connected to the control chip, the first optical port, the second optical port, and the plurality of third photoelectric composite ports. The first optical port is configured to connect to an optical line terminal OLT, and transmit an optical signal between the ODN apparatus and the OLT. The second optical port is configured to connect to a next-level ODN apparatus, and transmit an optical signal between the ODN apparatus and the next-level ODN apparatus. The plurality of third photoelectric composite ports are configured to connect to a plurality of ONUs, and transmit optical signals and electrical signals between the ODN apparatus and the plurality of ONUs. The third photoelectric composite port is a port that can simultaneously transmit an optical signal and an electrical signal. The control chip is configured to control the plurality of third photoelectric composite ports to send a plurality of electrical signals that carry port identification information to the plurality of corresponding ONUs, where the port identification information indicates identifiers of the plurality of third photoelectric composite ports. The optical splitting module is configured to perform power splitting on a first optical signal sent by the OLT to obtain a second optical signal and a plurality of third optical signals, where the second optical signal is transmitted to the next-level ODN apparatus, and the plurality of third optical signals are transmitted to the plurality of ONUs. The optical splitting module is further configured to: separately receive upstream optical signals of the plurality of corresponding ONUs from the plurality of third photoelectric composite ports, and transmit the upstream optical signals to the OLT, where the upstream optical signals carry identification information of the ONUs that send the upstream optical signals and port identification information of the corresponding third photoelectric composite ports that transmit the upstream optical signals.

In this possible implementation, the ODN apparatus transmits information such as identification information of the plurality of ONUs and port identification information to the OLT, so that the OLT determines network topology information based on the information such as the identification information of the plurality of ONUs and the port identification information. The network topology information includes a correspondence between the plurality of ONUs and the plurality of third photoelectric ports.

In a possible implementation of the first aspect, the ODN apparatus further includes a first optical power monitor MPD, and the first MPD is connected to the first optical port. The first MPD is configured to: obtain a first optical power of the first optical signal, and transmit the first optical power to the control chip. The control chip is further configured to control at least one third photoelectric composite port of the plurality of third photoelectric composite ports to send at least one electrical signal that carries the first optical power to at least one ONU of the plurality of ONUs, where the at least one third photoelectric composite port corresponds to the at least one ONU. The optical splitting module is further configured to: separately receive an upstream optical signal of the at least one ONU from the plurality of third photoelectric composite ports, and transmit the upstream optical signal to the OLT, where the upstream optical signal of the at least one ONU carries the first optical power. The optical splitting module is further configured to: separately receive an upstream optical signal of the next-level ODN apparatus from the second optical port, and transmit the upstream optical signal to the OLT, where the upstream optical signal of the next-level ODN apparatus carries a first optical power of the next-level ODN apparatus.

In a possible implementation of the first aspect, the upstream optical signal of the at least one ONU further carries a downstream optical power received by the at least one ONU, and the upstream optical signal of the next-level ODN apparatus further carries downstream optical powers received by a plurality of ONUs connected to the next-level ODN apparatus.

In this possible implementation, the ODN apparatus transmits, to the OLT, the first optical power of the ODN apparatus, the first optical power of the next-level ODN apparatus, the downstream optical powers received by the plurality of ONUs connected to the ODN apparatus, and the downstream optical powers received by the plurality of ONUs connected to the next-level ODN, so that the OLT can determine the network topology information based on these pieces of power information. The network topology information further includes level information of the ODN apparatus and information about levels to which the plurality of ONUs belong.

In a possible implementation of the first aspect, the ODN apparatus further includes a second MPD and a third MPD, the second MPD is connected to the second optical port, and the third MPD is connected to the plurality of third photoelectric ports. The second MPD is configured to: obtain a second optical power of the second optical signal, and transmit the second optical power to the control chip. The third MPD is configured to: obtain third optical power of the plurality of third optical signals, and transmit the third optical power to the control chip. The control chip is further configured to control at least one third photoelectric composite port of the plurality of third photoelectric composite ports to send at least one electrical signal that carries the second optical power and the third optical powers to at least one ONU of the plurality of ONUs, where the at least one third photoelectric composite port corresponds to the at least one ONU. The optical splitting module is further configured to: separately receive an upstream optical signal of the at least one corresponding ONU from the plurality of third photoelectric composite ports, and transmit the upstream optical signal to the OLT. The upstream optical signal carries the first optical power, the second optical power, the third optical powers, and the downstream optical powers received by the plurality of ONUs.

In a possible implementation of the first aspect, the ODN apparatus further includes a first filter, a second filter, and a third filter. The first MPD is connected to the optical splitting module through the first filter, the second MPD is connected to the optical splitting module through the second filter, and the third MPD is connected to the optical splitting module through the third filter. The first filter is configured to filter an optical signal received by the first MPD. The second filter is configured to filter an optical signal received by the second MPD. The third filter is configured to filter an optical signal received by the third MPD. In this possible implementation, the OLT may determine an optical power loss based on these pieces of obtained power information. The optical power loss includes an optical power loss from the OLT to the ODN apparatus, optical power losses from the first optical port to the second optical port and the third photoelectric port, and optical power losses from the third photoelectric ports to the plurality of ONUs.

In a possible implementation of the first aspect, the optical splitting module includes a first optical splitter and an even ratio optical splitter, and an output port of the first optical splitter is connected to an input port of the even ratio optical splitter. The equal ratio optical splitter is an optical splitter that performs power splitting on an input optical signal to obtain a plurality of output optical signals with equal optical powers. The first optical splitter is configured to perform power splitting on the first optical signal to obtain the second optical signal and a fourth optical signal. The equal ratio optical splitter is configured to perform power splitting on the fourth optical signal to obtain the plurality of third optical signals.

In a possible implementation of the first aspect, the first optical splitter is an adjustable optical splitter. The adjustable optical splitter is an optical splitter whose power splitting ratio is adjustable.

In this possible implementation, the first optical splitter is the adjustable optical splitter. Therefore, an optical power ratio of the second optical signal and an optical power ratio of the plurality of third optical signals may be simply and efficiently adjusted by directly adjusting a split ratio of the first optical splitter.

According to a second aspect, an embodiment of this application provides a signal processing method. The method is applied to an ODN apparatus, and the ODN apparatus is connected to an OLT, a plurality of ONUs, and a next-level ODN apparatus. The method includes: An ODN apparatus receives a first optical signal sent by an optical line terminal OLT. The ODN apparatus performs power splitting on the first optical signal to obtain a second optical signal and a plurality of third optical signals. The ODN apparatus transmits the second optical signal to a next-level ODN apparatus, and separately transmits the plurality of third optical signals to a plurality of corresponding ONUs. The ODN apparatus separately sends a plurality of electrical signals that carry port identification information to the plurality of corresponding ONUs, where the port identification information indicates identifiers of a plurality of third photoelectric composite ports. The ODN apparatus separately receives upstream optical signals of the plurality of ONUs, and transmits the upstream optical signals to the OLT, where the upstream optical signals carry identification information of the ONUs that send the upstream optical signals and port identification information of the corresponding third photoelectric composite ports that transmit the upstream optical signals, the upstream optical signals are for determining network topology information. The network topology information includes a correspondence between the plurality of ONUs and the plurality of third photoelectric ports.

In this possible implementation, the ODN apparatus transmits information such as identification information of the plurality of ONUs and port identification information to the OLT, so that the OLT determines network topology information based on the information such as the identification information of the plurality of ONUs and the port identification information. The network topology information includes a correspondence between the plurality of ONUs and the plurality of third photoelectric ports.

In a possible implementation of the second aspect, the method further includes: The ODN apparatus obtains a first optical power of the first optical signal. The ODN apparatus separately sends at least one electrical signal that carries the first optical power to at least one ONU of the plurality of ONUs. The ODN apparatus separately receives an upstream optical signal of the at least one ONU, and transmits the upstream optical signal to the OLT, where the upstream optical signal of the at least one ONU carries the first optical power. The ODN apparatus receives an upstream optical signal of the next-level ODN apparatus and transmits the upstream optical signal to the OLT, where the upstream optical signal of the next-level ODN apparatus carries a first optical power of the next-level ODN apparatus, and the upstream optical signal of the at least one ONU is for determining network topology information. The network topology information includes level information of the ODN apparatus and information about levels to which the plurality of ONUs belong.

In a possible implementation of the second aspect, the upstream optical signal of the at least one ONU further carries a downstream optical power received by the at least one ONU, and the upstream optical signal of the next-level ODN apparatus further carries downstream optical powers received by a plurality of ONUs connected to the next-level ODN apparatus.

In this possible implementation, the ODN apparatus transmits, to the OLT, the first optical power of the ODN apparatus, the first optical power of the next-level ODN apparatus. The downstream optical powers received by the plurality of ONUs connected to the ODN apparatus, and the downstream optical powers received by the plurality of ONUs connected to the next-level ODN are transmitted to the OLT, so that the OLT can determine more network topology information based on these pieces of power information. The network topology information further includes the level information of the ODN apparatus and the information about the levels to which the plurality of ONUs belong.

In a possible implementation of the second aspect, the method further includes: The ODN apparatus obtains a second optical power of the second optical signal. The ODN apparatus obtains third optical powers of the plurality of third optical signals. The ODN apparatus separately sends a plurality of electrical signals that carry the second optical power and the third optical powers to the plurality of ONUs. The ODN apparatus separately receives upstream optical signals of the plurality of corresponding ONUs, and transmits the upstream optical signals to the OLT. The upstream optical signal carries the first optical power, the second optical power, the third optical powers, and the downstream optical powers received by the plurality of ONUs. The upstream optical signal is for determining an optical power loss, where the optical power loss includes an optical power loss from the OLT to the ODN apparatus, optical power losses from a first optical port to a second optical port and a third photoelectric port, and optical power losses from the third photoelectric ports to the plurality of ONUs.

In this possible implementation, the ODN apparatus further sends the first optical power, the second optical power, the third optical powers, and the downstream optical powers received by the plurality of ONUs to the OLT. In this way, the OLT can determine the optical power loss based on these pieces of power information. The optical power loss includes an optical power loss from the OLT to the ODN apparatus, optical power losses from the first optical port to the second optical port and the third photoelectric port, and optical power losses from the third photoelectric ports to the plurality of ONUs.

In a possible implementation of the second aspect, the ODN apparatus includes a first optical splitter and an equal ratio optical splitter, and the performing, by the ODN apparatus, power splitting on the first optical signal to obtain a second optical signal and a plurality of third optical signals includes: The ODN apparatus performs power splitting on the first optical signal to obtain the second optical signal and a fourth optical signal by using the first optical splitter. The ODN apparatus performs power splitting on the fourth optical signal to obtain the plurality of third optical signals with equal optical powers by using the equal ratio optical splitter.

In this possible implementation, the optical splitting module performs power splitting on the first optical signal to obtain the second optical signal and the plurality of third optical signals by using the first optical splitter and the equal ratio optical splitter, and may directly determine an optical power ratio of the second optical signal and the plurality of third optical signals through an optical splitting ratio of the first optical splitter. The equal ratio optical splitter performs power splitting on the fourth optical signal to obtain the plurality of third optical signals, to provide the plurality of third optical signals with equal optical powers to the plurality of ONUs.

In a possible implementation of the second aspect, the first optical splitter is an optical splitter whose power splitting ratio is adjustable, and the method further includes: The ODN apparatus receives first upstream optical signals sent by the plurality of ONUs, and transmits the first upstream optical signals to the OLT through the first optical port. The first upstream optical signals carry network address information of the plurality of ONUs and a plurality of first downstream optical powers received by the plurality of ONUs. The ODN apparatus receives a downstream optical signal sent by the OLT, and sends the downstream optical signal to a target ONU indicated by the downstream optical signal. The downstream optical signal carries an adjustment signal, and the target ONU is an ONU that has a lowest first downstream optical power and that of the plurality of ONUs determined by the OLT. The ODN apparatus receives an electrical signal that is sent by the target ONU and that carries the adjustment signal, where the adjustment signal indicates the ODN apparatus to adjust the adjustable optical splitter, to increase an optical power of a target third optical signal output by a target third photoelectric port. The target third photoelectric port and the target third optical signal correspond to the target ONU.

In this possible implementation, the optical split ratio of the adjustable optical splitter is adjusted, to increase the optical power of the downstream optical signal received by the target ONU. This step is performed for a plurality of times, so that powers of optical signals received by the plurality of ONUs in an entire system are more balanced.

In a possible implementation of the second aspect, the method further includes: The ODN apparatus receives second upstream optical signals sent by the plurality of ONUs, and transmits the second upstream optical signals to the OLT. The second upstream optical signals carry the network address information of the plurality of ONUs and second downstream optical powers received by the plurality of ONUs. The first upstream optical signal and the second upstream optical signal are for determining the network topology information, where the network topology information further includes the level information of the ODN apparatus.

In this possible implementation, the ODN apparatus transmits the first upstream optical signal and the second upstream optical signal to the OLT. In this way, the OLT may determine the network topology information based on the network address information of the plurality of ONUs, the plurality of first downstream optical powers received by the plurality of ONUs, and the second downstream optical powers received by the plurality of ONUs that are carried in the first upstream optical signal and the second upstream optical signal. The network topology information includes the level information of the ODN apparatus.

According to a third aspect, an embodiment of this application provides a signal processing method. The method is applied to an OLT, where the OLT is connected to an ODN apparatus, and the ODN apparatus is connected to a next-level ODN apparatus and a plurality of ONUs. The method includes: The OLT sends a first optical signal to the optical distribution network ODN apparatus. The OLT receives a plurality of upstream optical signals that are sent by a plurality of ONUs and that are transmitted by the ODN apparatus, where the plurality of upstream optical signals carry port identification information and a plurality of pieces of network address information of the plurality of corresponding ONUs. The port identification information indicates identifiers of a plurality of third photoelectric ports that are connected to the plurality of ONUs and that are of the ODN apparatus. The OLT determines network topology information based on the port identification information and the plurality of pieces of network address information, where the network topology information includes information about a correspondence between the plurality of ONUs and the plurality of third photoelectric ports.

In this possible implementation, the OLT receives information such as identification information of the plurality of ONUs and port identification information that are sent by the ODN apparatus, and then may determine the network topology information based on the information such as the identification information of the plurality of ONUs and the port identification information. The network topology information includes a correspondence between the plurality of ONUs and the plurality of third photoelectric ports.

In a possible implementation of the third aspect, the method further includes: The OLT receives an upstream optical signal transmitted by the ODN apparatus. The upstream optical signal carries a first optical power of the ODN apparatus. The upstream optical signal further carries a first optical power of at least one next-level ODN apparatus of the ODN apparatus. The OLT determines the network topology information based on information carried in the upstream optical signal. The network topology information includes level information of the ODN apparatus, level information of the at least one next-level ODN apparatus, and information about levels to which the plurality of corresponding ONUs belong. A larger value of the first optical power and/or downstream optical powers received by the plurality of ONUs indicates a higher level of a corresponding ODN apparatus.

In a possible implementation of the third aspect, the upstream optical signal further carries the downstream optical powers received by the plurality of ONUs connected to the ODN apparatus and downstream optical powers received by the plurality of ONUs connected to the at least one next-level ODN apparatus.

In this possible implementation, the OLT receives the first optical power of the OLT that is sent by the ODN apparatus, the first optical power of the next-level ODN apparatus, downstream optical power received by the plurality of ONUs connected to the ODN apparatus, and the downstream optical powers received by the plurality of ONUs connected to the next-level ODN apparatus. Then, the OLT may determine more network topology information based on these pieces of power information, where the network topology information further includes level information of the ODN apparatus and information about levels to which the plurality of ONUs belong.

In a possible implementation of the third aspect, the method further includes: The OLT receives an upstream optical signal transmitted by the ODN apparatus, where the upstream optical signal carries information about the first optical power of the first optical signal, the second optical power of the second optical signal, the plurality of third optical power of the plurality of third optical signals, and the downstream optical power received by the plurality of ONUs. The OLT determines an optical power loss in a network based on the first optical power, the second optical power, the plurality of third optical powers, and the downstream optical powers received by the plurality of ONUs. The optical power loss in the network includes an optical power loss from the OLT to the ODN apparatus, optical power losses from the first optical port to the second optical port and the third photoelectric port, and optical power losses from the third photoelectric ports to the plurality of ONUs.

In this possible implementation, the OLT receives the first optical power, the second optical power, the third optical power that are sent by the ODN apparatus, and the downstream optical powers received by the plurality of ONUs. Then, the OLT may determine the optical power loss based on these pieces of power information. The optical power loss includes an optical power loss from the OLT to the ODN apparatus, optical power losses from the first optical port to the second optical port and the third photoelectric port, and optical power losses from the third photoelectric ports to the plurality of ONUs.

In a possible implementation of the third aspect, the method further includes: The OLT receives a first upstream optical signal transmitted by the ODN apparatus. The first upstream optical signals carry network address information of the plurality of ONUs and a plurality of first downstream optical powers received by the plurality of ONUs. The OLT determines a target ONU based on the plurality of first downstream optical powers, where the target ONU is an ONU that has a lowest optical power of the plurality of first downstream optical powers. The OLT sends the downstream optical signal to the target ONU, where the downstream optical signal carries the adjustment signal, so that the target ONU sends an electrical signal that carries the adjustment signal to the target ODN apparatus. The adjustment signal indicates the target ODN apparatus to adjust an adjustable optical splitter of the target ODN apparatus, to increase the optical power of the target third optical signal output by the target third photoelectric port. The target third photoelectric port and the target third optical signal correspond to the target ONU. The target ODN apparatus is an ODN apparatus connected to the target ONU or an upper-level ODN apparatus of the ODN apparatus.

In this possible implementation, the OLT adjusts the split ratio of the adjustable optical splitter by sending the downstream optical signal that carries the adjustment signal to the ODN apparatus, to increase the optical power of the downstream optical signal received by the target ONU. This step is performed for a plurality of times, so that powers of optical signals received by the plurality of ONUs in an entire system are more balanced.

In a possible implementation of the third aspect, the method further includes: The OLT receives a second upstream optical signal transmitted by the ODN apparatus, where the second upstream optical signal carries the network address information of the plurality of ONUs and second downstream optical powers received by the plurality of ONUs. The OLT determines the network topology information based on the first downstream optical power and the second downstream optical power, where the network topology information includes the level information of the ODN apparatus.

In this possible implementation, the OLT receives the first upstream optical signal and the second upstream optical signal that are sent by the ODN apparatus. Then, the OLT may determine the network topology information based on the network address information of the plurality of ONUs, the plurality of first downstream optical powers received by the plurality of ONUs, and the second downstream optical powers received by the plurality of ONUs that are carried in the first upstream optical signal and the second upstream optical signal. The network topology information includes the level information of the ODN apparatus.

According to a fourth aspect, an embodiment of this application provides an optical distribution network ODN apparatus. The ODN apparatus includes a first optical splitter and a second optical splitter, and the second optical splitter is an equal ratio optical splitter. The first optical splitter is configured to perform power splitting on a first optical signal sent by an OLT to obtain a second optical signal and a fourth optical signal. The second optical splitter is configured to perform power splitting on the fourth optical signal to obtain a plurality of third optical signals with equal powers. The second optical signal is sent to a lower-level ODN apparatus, and the plurality of third optical signals are sent to the plurality of corresponding ONUs.

In this possible implementation, the first optical signal is split into the second optical signal and the plurality of third optical signals through power splitting performed by the first optical splitter and the second optical splitter. The optical power ratio of the second optical signal and the plurality of third optical signals may be directly determined based on the split ratio of the first optical splitter. The second optical splitter performs power splitting on the fourth optical signal to obtain the plurality of third optical signals, so that the plurality of third optical signals with equal optical powers can be simply and directly provided to the plurality of ONUs.

In a possible implementation of the fourth aspect, the first optical splitter is an adjustable optical splitter whose power splitting ratio is adjustable.

In this possible implementation, the first optical splitter is the adjustable optical splitter. Therefore, an optical power ratio of the second optical signal and an optical power ratio of the plurality of third optical signals may be simply and efficiently adjusted by directly adjusting a split ratio of the first optical splitter.

According to a fifth aspect, an embodiment of this application provides a passive optical network PON network system. The PON network system includes a plurality of ODN apparatuses, a plurality of ONUs, and an OLT. The ODN apparatus is a structure in the first aspect, and the plurality of ODN apparatuses, the plurality of ONUs, and the OLT are configured to perform the signal processing methods in the second aspect to the fourth aspect.

According to a sixth aspect, an embodiment of this application provides a signal processing method. The method is applied to the passive optical network PON network system in the fifth aspect, and the method includes the signal processing method applied to an ODN apparatus in the second aspect and the signal processing method applied to an OLT in the third aspect.

According to a seventh aspect, an embodiment of this application provides an OLT. The OLT includes a processor and an optical transceiver. The processor is connected to the optical transceiver, and is configured to perform the method described in any one of the second aspect or the specific implementations of the second aspect. The optical transceiver is configured to complete a function of receiving an optical signal from an external device and/or sending a signal received from a processor.

It can be learned from the foregoing technical solutions that embodiments of this application have the following advantages: The ODN apparatus transmits information such as identification information of the plurality of ONUs and port identification information to the OLT, so that the OLT determines network topology information based on the information such as the identification information of the plurality of ONUs and the port identification information, where the network topology information includes a correspondence between the plurality of ONUs and the plurality of third photoelectric ports.

### BRIEF DESCRIPTION OF DRAWINGS

FIG. 1 is a network framework diagram of a passive optical network system;
FIG. 2 is a network framework diagram of a passive optical network system according to an embodiment of this application;
FIG. 3 is a first schematic diagram of a structure of an ODN apparatus according to an embodiment of this application;
FIG. 4 is a second schematic diagram of a structure of an ODN apparatus according to an embodiment of this application;
FIG. 5 is a schematic diagram of a scenario of a passive optical network system according to an embodiment of this application;
FIG. 6 is a third schematic diagram of a structure of an ODN apparatus according to an embodiment of this application;
FIG. 7 is a first signaling flowchart of a signal processing method according to an embodiment of this application;
FIG. 8 is a second signaling flowchart of a signal processing method according to an embodiment of this application;
FIG. 9 is a third signaling flowchart of a signal processing method according to an embodiment of this application;
FIG. 10 is a fourth signaling flowchart of a signal processing method according to an embodiment of this application;
FIG. 11 is a fifth signaling flowchart of a signal processing method according to an embodiment of this application; and
FIG. 12 is a sixth signaling flowchart of a signal processing method according to an embodiment of this application.

### DESCRIPTION OF EMBODIMENTS

Embodiments of this application provide an optical distribution network apparatus and a signal processing method, to transmit information such as identification information of a plurality of ONUs and port identification information to an OLT by using the ODN apparatus. The information such as the identification information of the plurality of ONUs and the port identification information is used by the OLT to determine network topology information of a PON system.

The following describes embodiments of this application with reference to the accompanying drawings. It is clear that the described embodiments are merely some rather than all of embodiments of this application. A person of ordinary skill in the art may learn that, with development of technologies and emergence of new scenarios, technical solutions provided in embodiments of this application are also applicable to similar technical problems.

In the specification, claims, and accompanying drawings of this application, the terms "first", "second", and the like are intended to distinguish between similar objects but do not necessarily indicate a specific order or sequence. It should be understood that these terms may be interchanged in appropriate circumstances so that embodiments described herein can be implemented in an order other than the order illustrated or described. In addition, the terms "including" and any other variant thereof are intended to cover a non-exclusive inclusion. For example, processes, methods, systems, products, or devices that include a series of steps or units are not limited to the steps or the units that are clearly listed, and may include other steps and units that are not clearly listed or that are essential for the processes, methods, products, or devices.

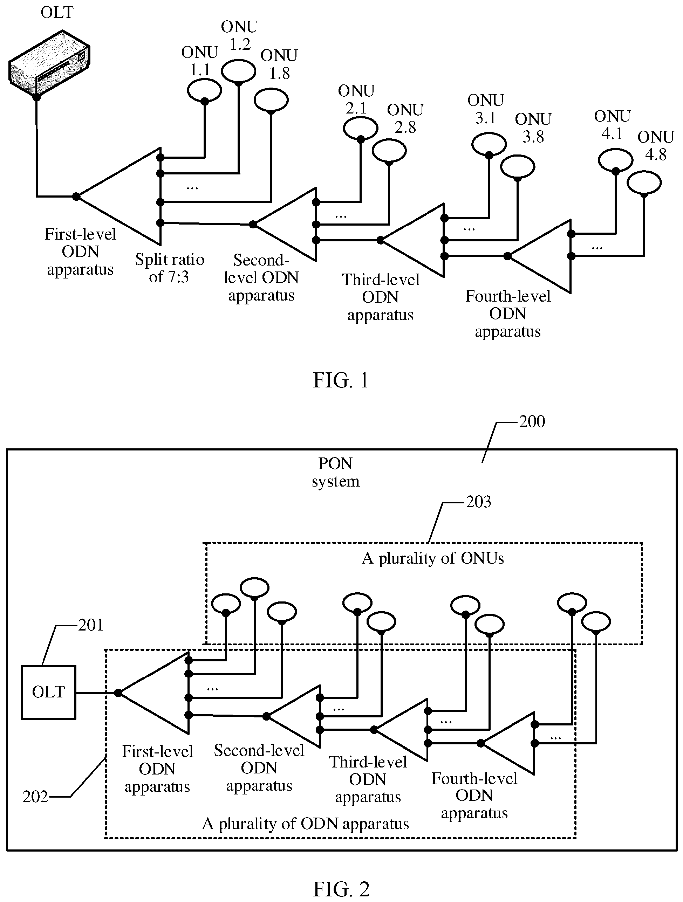

FIG. 1 shows a passive optical network PON system according to an embodiment of this application. As shown in FIG. 1, in the PON system, an OLT transmits one downstream optical signal to a plurality of optical network units (optical network units, ONUs) through power splitting and transmission of a downstream optical signal performed by an ODN apparatus, so that one-to-many optical interconnection is implemented. In the PON system, the ODN apparatus includes a plurality of optical splitters, and transmits, through power splitting on an optical signal performed by a plurality of optical splitters with a fixed split ratio and transmission in an optical cable, an optical signal sent by one optical line terminal OLT to the plurality of ONUs.

FIG. 2 shows a passive optical network PON system 200 according to an embodiment of this application. As shown in FIG. 2, the PON system 200 includes an optical line terminal OLT 201, a plurality of ODN apparatuses 202, and a plurality of optical network units ONUs 203. The plurality of ODN apparatuses 202 are sequentially connected. An input port of a first-level ODN apparatus (namely, a first ODN apparatus) is connected to an output port of the OLT 201, and an input port of an another-level ODN apparatus is connected to an output port of an upper-level ODN apparatus. One of a plurality of output ports of each ODN apparatus is connected to a next-level ODN apparatus, and other output ports are connected to a plurality of ONUs 203.

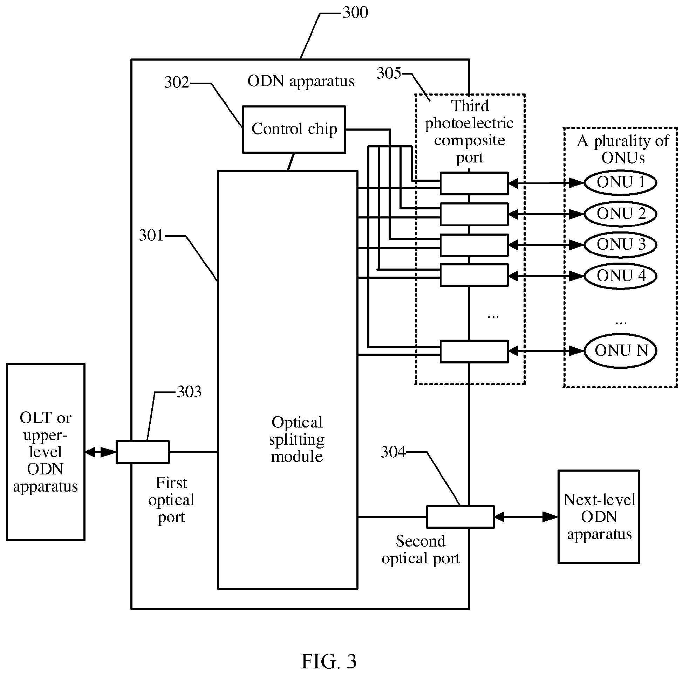

FIG. 3 is a first schematic diagram of a structure of an optical distribution network ODN apparatus 300 according to an embodiment of this application. Embodiment 1: As shown in FIG. 3, in this embodiment of this application, the optical distribution network ODN apparatus 300 includes an optical splitting module 301, a control chip 302, a first optical port 303, a second optical port 304, and a plurality of third photoelectric composite ports 305. The optical splitting module 301 is connected to the control chip 302, the first optical port 303, the second optical port 304, and the plurality of third photoelectric composite ports 305, and the control chip 302 is connected to any photoelectric composite port of the plurality of third photoelectric composite ports 305.

The first optical port 303 is an input port. If the ODN apparatus 300 is an uppermost-level ODN apparatus, namely, a first ODN apparatus, the first optical port 303 is configured to: connect to an optical line terminal OLT, and transmit an optical signal between the ODN apparatus 300 and the OLT. If the ODN apparatus 300 is not the uppermost-level ODN apparatus, the first optical port 303 is configured to: connect to an upper-level ODN apparatus, and transmit an optical signal between the ODN apparatus 300 and the upper-level ODN apparatus.

The second optical port 304 is one of a plurality of output ports of the ODN apparatus 300, and is configured to: connect to a next-level ODN apparatus, and transmit an optical signal between the ODN apparatus 300 and the next-level ODN apparatus.

The plurality of third photoelectric composite ports 305 are output ports of the ODN apparatus 300, and are configured to: connect a plurality of ONUs and the control chip 302, and transmit optical signals between the ODN apparatus 300 and the plurality of ONUs and electrical signals between the control chip 302 and the plurality of ONUs. The third photoelectric composite port is a port that can simultaneously transmit an optical signal and an electrical signal.

The optical splitting module 301 is configured to: receive, through the first optical port 303, a first optical signal sent by the OLT, and split the first optical signal into a second optical signal and a plurality of third optical signals through power splitting. The second optical signal is transmitted to the next-level ODN apparatus through the second optical port 304. The plurality of third optical signals are transmitted to the plurality of corresponding ONUs through the plurality of third photoelectric composite ports 305.

In this embodiment of this application, the OLT generates the downstream first optical signal and sends the downstream first optical signal to a first-level ODN apparatus. After receiving the first optical signal from the first optical port 303, that is, the input interface, the first-level ODN apparatus splits the first optical signal into a second optical signal and a plurality of third optical signals through power splitting performed by the optical splitting module 301. Then, the ODN apparatus transmits the plurality of third optical signals to the plurality of corresponding ONUs through the plurality of third photoelectric composite ports 305, and transmits the second optical signal to the next-level ODN apparatus through the second optical port 304. The next-level ODN apparatus continues to perform the foregoing operations until the optical signal is transmitted to a last-level ODN apparatus.

The control chip 302 is configured to process electrical signals transmitted by the plurality of third photoelectric composite ports 305. The electrical signals may be sent by the plurality of ONUs, or may be sent by the control chip 302 to the ONUs.

In this embodiment of this application, the ODN apparatus 300 may further include a PCB circuit board. The control chip 302 is connected to the plurality of third photoelectric composite ports 305 and the optical splitting module 301 by using the PCB circuit board. The PCB circuit board is configured to transmit electrical signals among the control chip 302, the plurality of third photoelectric composite ports 305, and the optical splitting module 301. In addition, the control chip 302 in this embodiment of this application may be connected to the plurality of third photoelectric composite ports 305 and the optical splitting module 301 in another manner, for example, by using a control circuit that can implement the foregoing functions. This is not specifically limited herein.

In a possible implementation, the PCB circuit board may be further configured to: process the electrical signals transmitted by the plurality of third photoelectric composite ports 305 and the optical splitting module 301, and then transmit the electrical signals to the control chip 302.

The control chip 302 is configured to control the plurality of third photoelectric composite ports 305 to send a plurality of electrical signals that carry port identification information to the plurality of corresponding ONUs. The port identification information indicates identifiers of the plurality of third photoelectric composite ports 305 of the ODN apparatus 300.

Any one of the plurality of ONUs is further configured to: after receiving the electrical signals that are sent by the control chip 302 and that carry the port identification information, record the port identification information and identifiers of the ONUs. Because the plurality of ODNs are in a one-to-one correspondence with the plurality of third photoelectric composite ports 305 that send the port identification information, to be specific, the ONUs record information about correspondences between the ONUs and the third photoelectric composite ports, and the information about the plurality of correspondences may be a plurality of information pairs.

In a possible implementation, the control chip 302 may be further configured to: receive, from the plurality of third photoelectric composite ports 305, electrical signals that are sent by the plurality of ONUs and that carry the identifiers of the plurality of ONUs. After receiving the plurality of electrical signals, the control chip 302 records the identifiers of the plurality of ONUs and port identification information of the corresponding third photoelectric composite ports that transmit the electrical signals. Because the plurality of ODNs are in the one-to-one correspondence with the plurality of third photoelectric composite ports 305 that send the port identification information, the control chip 302 records the information about the plurality of correspondences between the plurality of ONUs and the plurality of third photoelectric composite ports 305. The information about the plurality of correspondences may be the plurality of information pairs. Then, the control chip 302 separately sends, to the corresponding ONUs through the third photoelectric composite ports, electrical signals that carry the information about the plurality of correspondences.

In this embodiment of this application, the information about the plurality of correspondences between the plurality of ONUs and the plurality of third photoelectric composite ports 305 may be recorded in the control chip 302, may be recorded in the plurality of ONUs, or may be recorded in both the control chip 302 and the plurality of ONUs. This is not specifically limited herein.

The plurality of ONUs are further configured to generate a plurality of upstream optical signals based on the information about the correspondences recorded by the ONUs or the information about the correspondences sent by the control chip 302. The plurality of upstream optical signals carry identification information of the ONU that sends the upstream optical signals and corresponding port identification information, that is, the information about the correspondences, and send the upstream optical signals to the ODN apparatus 300.

The ODN apparatus 300 is further configured to: separately receive, by using the optical splitting module 301, upstream optical signals of the plurality of corresponding ONUs from the plurality of third photoelectric composite ports 305, and transmit the upstream optical signals to the OLT, where the plurality of upstream optical signals carry identification information of the ONUs that send the upstream optical signals and port identification information of the plurality of corresponding third photoelectric composite ports that transmit the plurality of upstream optical signals.

The OLT is further configured to: after receiving the plurality of upstream optical signals, determine network topology information based on the identification information of the ONUs that send the upstream optical signals and the port identification information of the plurality of corresponding third photoelectric composite ports that transmit the plurality of upstream optical signals that are carried in the plurality of upstream optical signals. The network topology information includes the information about the correspondences between the plurality of ONUs and the plurality of third photoelectric composite ports 305.

In this embodiment of this application, the identification information of the ONU may be network address information of the ONU. For example, a MAC address or an IP address of the ONU may also be a configured number identifier, a name identifier, or the like. This is not specifically limited herein.

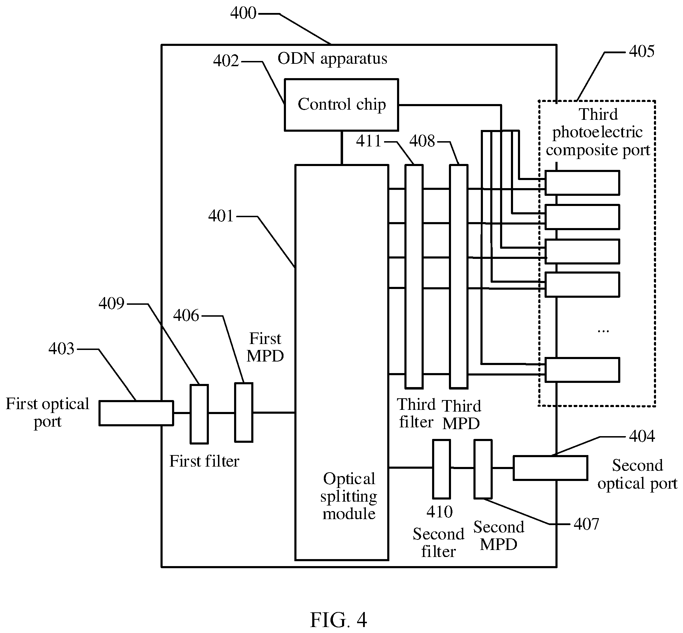

FIG. 4 is a second schematic diagram of a structure of an optical distribution network ODN apparatus 400 according to an embodiment of this application. As shown in FIG. 4, the ODN apparatus 400 in this embodiment of this application further includes a first optical power monitor MPD 406, and the first MPD 406 is connected to a first optical port 403. The first MPD 406 is configured to: obtain a first optical power of a first optical signal, and transmit the first optical power to a control chip 402. Then, the control chip 402 is further configured to control at least one third photoelectric composite port of a plurality of third photoelectric composite ports 405 to send at least one electrical signal that carries the first optical power to at least one ONU of a plurality of ONUs. The at least one ONU is configured to: after receiving the electrical signal that carries the first optical power, generate an upstream optical signal, and send the upstream optical signal to the corresponding ODN apparatus 400. The upstream optical signal of the at least one ONU carries the first optical power.

Then, an optical splitting module 401 of the ODN apparatus 400 is further configured to: separately receive the upstream optical signal of the at least one ONU from the plurality of third photoelectric composite ports 405, and transmit the upstream optical signal to an OLT. The optical splitting module 401 is further configured to: separately receive an upstream optical signal of a next-level ODN apparatus from a second optical port 404, and transmit the upstream optical signal to the OLT. The upstream optical signal of the next-level ODN apparatus carries a first optical power of the next-level ODN apparatus.

In a possible implementation, the upstream optical signal of the at least one ONU further carries an optical power of an optical signal received by the ONU that sends the upstream optical signal, that is, a downstream optical power received by the ONU. The upstream optical signal of the next-level ODN apparatus further carries downstream optical powers received by a plurality of ONUs that are connected to the next-level ODN apparatus.

In a possible implementation, as shown in FIG. 2, if the next-level ODN apparatus is further connected to another lower-level ODN apparatus, the next-level ODN apparatus further transmits, to the OLT, an upstream optical signal sent by the another lower-level ODN apparatus. The upstream optical signal sent by the another lower-level ODN apparatus carries a first optical power of the ODN apparatus that sends the upstream optical signal and/or the downstream optical powers received by the plurality of ONUs that are connected to the another lower-level ODN apparatus.

The OLT is further configured to: after receiving a plurality of upstream optical signals transmitted by the ODN apparatus 400, determine network topology information based on information carried in the plurality of upstream optical signals. The network topology information further includes level information of the plurality of ODN apparatuses 400 and information about levels to which the plurality of ONUs belong. Specifically, in a PON transmission process, each time a downstream optical signal passes through one ODN apparatus 400, a part of the optical signal is obtained through splitting to be sent to the ONU. Therefore, a first optical power of a first optical signal received by each ODN apparatus 400 decreases layer by layer based on levels of a plurality of ODN apparatuses 400. Therefore, after the OLT determines an optical power of an optical signal obtained by the first MPD 406, when a connection position of a first MPD 406 of each ODN apparatus 400 is the same, that is, an optical power of a same optical signal is obtained, the OLT may determine the network topology information of the PON based on sizes of optical powers of optical signals obtained by the plurality of first MPDs 406. The network topology information includes level information of the plurality of ODN apparatuses 400. A larger optical power of the optical signal obtained by the first MPD 406 indicates a higher level of a corresponding ODN apparatus 400. Conversely, a level of the corresponding ODN apparatus 400 is lower.

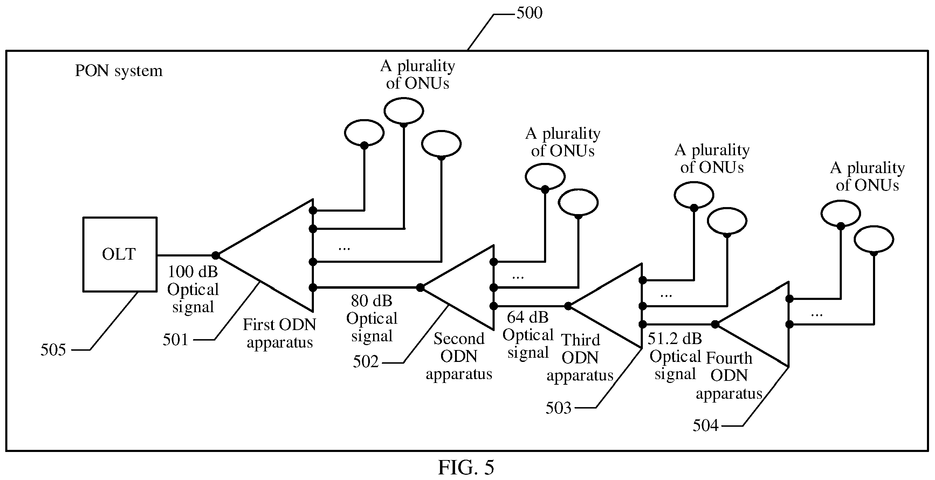

FIG. 5 is a schematic scenario diagram of a PON system according to an embodiment of this application. As shown in FIG. 5, a split ratio of each ODN apparatus in the PON system 500 is 4:1, and an optical power of an optical signal sent by an OLT 505 received by a first ODN apparatus 501 is 100 dB. After the first ODN apparatus 501 splits the optical signal, an optical power of an optical signal received by a second ODN apparatus 502 is 80 dB. After the second ODN apparatus 502 splits the optical signal, an optical power of an optical signal received by a third ODN apparatus 503 is 64 dB. After the third ODN apparatus 503 splits the optical signal, an optical power of an optical signal received by a fourth ODN apparatus 504 is 51.2 dB. After obtaining a first optical power of each ODN apparatus, the OLT may determine a level of each ODN apparatus based on the first optical power of each ODN apparatus. Based on the first optical power of each ODN apparatus, the OLT may be determined, based on descending order of levels, that levels of the four ODN apparatuses are successively: the first ODN apparatus 501, the second ODN apparatus 502, the third ODN apparatus 503, and the fourth ODN apparatus 504.

In this embodiment of this application, the optical splitting module 401 includes a first optical splitter and a second optical splitter. The first MPD 406 may be connected to an input port of the first optical splitter, and is configured to obtain an optical power of the first optical signal. In addition, the first MPD 406 may also be connected to another port in an optical splitter group to obtain an optical power of another optical signal. For example, the first MPD 406 may be connected to a first output port of the first optical splitter, and is configured to obtain an optical power of a second optical signal. The first MPD 406 may be connected to a second output port of the first optical splitter, and is configured to obtain optical powers of optical signals split by the optical splitter group to a plurality of ONUs, that is, a sum of optical powers of a plurality of third optical signals. This is not specifically limited herein.

In this embodiment of this application, the ODN apparatus 400 transmits, to the OLT, a first optical power of the ODN apparatus 400, a first optical power of a next-level ODN apparatus, downstream optical powers received by the plurality of ONUs connected to the ODN apparatus 400, and downstream optical powers received by the plurality of ONUs connected to the next-level ODN. In this way, the OLT may determine the network topology information based on these pieces of power information. The network topology information further includes the level information of the ODN apparatus 400 and the information about the levels to which the plurality of ONUs belong.

As shown in FIG. 4, the ODN apparatus 400 further includes a second MPD 407 and a third MPD 408. The second MPD 407 is connected to the second optical port 404, and the third MPD 408 is connected to a plurality of third photoelectric ports. The second MPD 407 is configured to: obtain a second optical power of the second optical signal, and transmit the second optical power to the control chip 402. The third MPD 408 is configured to: obtain third optical powers of the plurality of third optical signals, and transmit the third optical powers to the control chip 402.

The control chip 402 is further configured to: after receiving the second optical power and the third optical powers, control at least one third photoelectric composite port of the plurality of third photoelectric composite ports 405 to send at least one electrical signal that carries the second optical power and the third optical powers to at least one of the plurality of ONUs. The at least one third photoelectric composite port corresponds to the at least one ONU.

The at least one ONU is further configured to: after receiving the electrical signal that carries the second optical power and the third optical powers, generate an upstream optical signal and send the upstream optical signal to the ODN apparatus 400. The upstream optical signal carries the first optical power, the second optical power, the third optical powers, and the downstream optical powers received by the plurality of ONUs.

The optical splitting module 401 is further configured to: separately receive an upstream optical signal of the at least one corresponding ONU from the plurality of third photoelectric composite ports 405, and transmit the upstream optical signal to the OLT. The upstream optical signal carries the first optical power, the second optical power, the third optical powers, and the downstream optical powers received by the plurality of ONUs.

The OLT is further configured to: receive the upstream optical signal, and determine an optical power loss based on the first optical power, the second optical power, and the third optical powers, and the downstream optical powers received by the plurality of ONUs that are carried in the upstream optical signal. The optical power loss includes an optical power loss from the OLT to the ODN apparatus 400, optical power losses from the first optical port 403 to the second optical port 404 and the third photoelectric port, and optical power losses from the third photoelectric ports to the plurality of ONUs.

In a possible implementation, the ODN apparatus 400 further includes a first filter 409, a second filter 410, and a third filter 411. The first MPD 406 is connected to the optical splitting module 401 through the first filter. The second MPD is connected to the optical splitting module 401 through the second filter 410. The third MPD is connected to the optical splitting module 401 through the third filter 411. The first filter 409 is configured to filter an optical signal received by the first MPD 406. The second filter 410 is configured to filter an optical signal received by the second MPD 407. The third filter 411 is configured to filter an optical signal received by the third MPD 408. In this way, the first MPD 406, the second MPD 407, and the third MPD 408 receive only downstream optical signals or receive only upstream optical signals. In this way, more accurate optical power is obtained.

In this embodiment of this application, a filter is added before an MPD, so that an optical signal received by the MPD can be filtered. In this way, accuracy of an optical power obtained by the MPD is improved. For MPDs (namely, the third MPDs) connected to the plurality of third photoelectric composite ports of the optical splitting module, when the third filter is configured to enable the third MPD to receive a downstream optical signal, a quantity of third MPDs needs to be equal to a quantity of the plurality of third photoelectric composite ports, and the third MPDs are in a one-to-one correspondence with the plurality of third photoelectric composite ports. When the third filter is configured to enable the third MPD to receive an upstream optical signal, the plurality of third photoelectric composite ports of the optical splitting module may share an MPD, and the quantity of third MPDs may not correspond to output ports of the optical splitting module. For example, the plurality of third photoelectric composite ports may share one MPD to obtain power of the upstream optical signal. In this way, a quantity of MPDs is reduced, implementation costs are reduced, and system complexity is reduced.

In this embodiment of this application, the ODN apparatus 400 further sends the first optical power, the second optical power, the third optical powers, and the downstream optical powers received by the plurality of ONUs to the OLT. In this way, the OLT can determine the optical power loss based on these pieces of power information. The optical power loss includes the optical power loss from the OLT to the ODN apparatus 400, the optical power losses from the first optical port 403 to the second optical port 404 and the third photoelectric port, and the optical power losses from the third photoelectric ports to the plurality of ONUs.

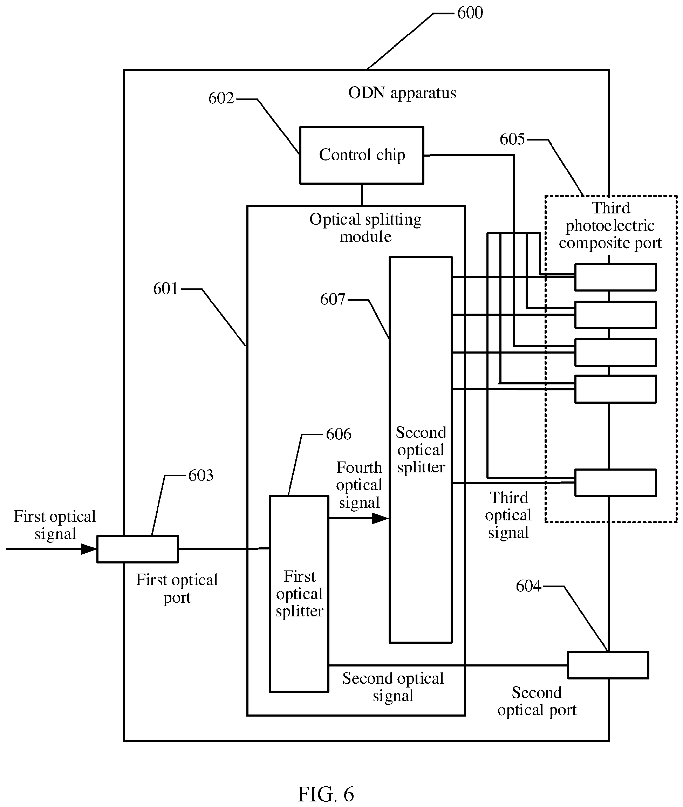

FIG. 6 is a third schematic diagram of a structure of an optical distribution network ODN apparatus 600 according to an embodiment of this application. Embodiment 3: As shown in FIG. 6, an optical splitting module 601 of the ODN apparatus 600 includes a first optical splitter 606 and a second optical splitter 607, and an output port of the first optical splitter 606 is connected to an input port of the second optical splitter 607. The second optical splitter 607 is an equal ratio optical splitter that performs power splitting on an input optical signal to obtain a plurality of output optical signals with equal optical powers. The first optical splitter 606 is configured to perform power splitting on a first optical signal to obtain a second optical signal and a fourth optical signal. The second optical splitter 607 is configured to perform power splitting on the fourth optical signal to obtain a plurality of third optical signals.

In a possible implementation, the first optical splitter 606 is an adjustable optical splitter. The adjustable optical splitter indicates that a power splitting ratio of the optical splitter is adjustable, for example, may be modified from 9:1 to 8:2.

When the first optical splitter 606 is the adjustable optical splitter, a plurality of ONUs are further configured to generate first upstream optical signals after receiving a downstream optical signal sent by an OLT. The first upstream optical signals carry network address information of the plurality of ONUs and a plurality of first downstream optical powers received by the plurality of ONUs. The optical splitting module 601 is further configured to: receive the first upstream optical signals sent by the plurality of ONUs, and transmit the first upstream optical signals to the OLT through a first optical port 603. The OLT is further configured to: receive a plurality of first upstream optical signals transmitted by the ODN apparatus 600, and determine a target ONU based on the plurality of first downstream optical powers carried in the plurality of first upstream optical signals. The target ONU is an ONU corresponding to a downstream optical power with a smallest value of the plurality of first downstream optical powers.

The OLT is further configured to generate a downstream optical signal and send the downstream optical signal to the ODN apparatus 600, where the downstream optical signal indicates the ODN apparatus 600 to transmit the downstream optical signal to the target ONU. The downstream optical signal carries an adjustment signal, and the adjustment signal indicates the ODN apparatus 600 to adjust the adjustable optical splitter, to increase an optical power of a target third optical signal output by a target third photoelectric port. The target third photoelectric port and the target third optical signal correspond to the target ONU.

The ODN apparatus 600 is further configured to: receive the downstream optical signal that carries the adjustment signal, and transmit the downstream optical signal to the target ONU.

The target ONU is configured to: receive the downstream optical signal that is transmitted by the ODN apparatus 600 and that carries the adjustment signal, generate an electrical signal that carries the adjustment signal, and send the electrical signal to the ODN apparatus 600.

The ODN apparatus 600 is further configured to: receive the electrical signal that is sent by the target ONU and that carries the adjustment signal, and adjust the adjustable optical splitter according to an indication of the adjustment signal, to increase the optical power of the target third optical signal output by the target third photoelectric port. The target third photoelectric port and the target third optical signal correspond to the target ONU.

In this embodiment of this application, the power splitting ratio and an optical split ratio of the adjustable optical splitter are adjusted, to increase an optical power of the downstream optical signal received by the target ONU. Through performance for a plurality of times, powers of optical signals received by the plurality of ONUs in an entire system are more balanced.

In this embodiment of this application, after the ODN apparatus adjusts the split ratio of the adjustable optical splitter, and sends a plurality of adjusted third optical signals to the plurality of corresponding ONUs, the plurality of ONUs are further configured to: generate a plurality of second upstream optical signals, and transmit the plurality of second upstream optical signals to the ODN apparatus 600. The second upstream optical signal carries network address information of the plurality of ONUs and a plurality of second downstream optical powers received by the plurality of ONUs. The second downstream optical powers are powers of downstream optical signals received by the plurality of ONUs after the ODN apparatus adjusts the optical split ratio of the adjustable optical splitter.

The ODN apparatus 600 is further configured to: receive second upstream optical signals sent by the plurality of ONUs, and transmit the second upstream optical signals to the OLT.

The OLT is further configured to: receive a second upstream optical signal that carries the network address information of the plurality of ONUs and the second downstream optical powers received by the plurality of ONUs, and determine network topology information based on the first upstream optical signal and the second upstream optical signal. The network topology information further includes level information of the ODN apparatus 600.

In this possible implementation, the ODN apparatus 600 transmits the first upstream optical signal and the second upstream optical signal to the OLT. In this way, the OLT may determine the network topology information based on the network address information of the plurality of ONUs, the plurality of first downstream optical powers received by the plurality of ONUs, and the second downstream optical powers received by the plurality of ONUs that are carried in the first upstream optical signal and the second upstream optical signal. The network topology information includes the level information of the ODN apparatus 600.

In this embodiment of this application, the ODN apparatus transmits, by using an upstream optical signal to the OLT, information such as identification information of the plurality of ONU, port identification information, a first optical power, a second optical power, a third optical power, and downstream optical powers received by the plurality of ONUs. In this way, the OLT can determine information such as the network topology information and a power loss in a network. The network topology information includes a correspondence between the plurality of ONUs and the plurality of third photoelectric ports, level information of the ODN apparatus, and information about levels to which the plurality of ONUs belong. The OLT determines these pieces of network topology information, to not only perceive a network topology and a device connection status of the entire PON network, to better adjust power allocation of optical signal transmission and reduce a power waste, but also determine a specific faulty node based on these pieces of information when an optical signal transmission fault occurs in the network, to facilitate repairing. In addition, when the ODN apparatus includes the adjustable optical splitter, the adjustable optical splitter may be further adjusted so that the powers of the optical signals received by the plurality of ONUs are more balanced. In this way, the power waste of the optical signals is reduced.

Based on the foregoing PON system, the following describes a signal processing method in embodiments of this application.

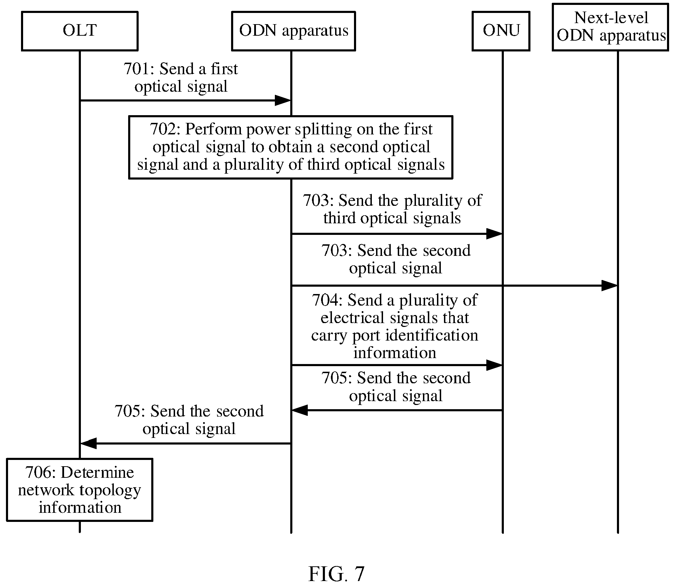

FIG. 7 shows a procedure of a signal processing method according to an embodiment of this application. As shown in FIG. 7, the procedure of the method includes the following plurality of steps.

701: An optical line terminal OLT sends a first optical signal to an ODN apparatus, and correspondingly, the ODN apparatus receives the first optical signal sent by the OLT.

702: The ODN apparatus performs power splitting on the first optical signal to obtain a second optical signal and a plurality of third optical signals.

703: The ODN apparatus transmits the second optical signal to a next-level ODN apparatus, and separately transmits the plurality of third optical signals to a plurality of corresponding ONUs.

704: The ODN apparatus separately sends a plurality of electrical signals that carry port identification information to the plurality of corresponding ONUs, where the port identification information indicates identifiers of a plurality of third photoelectric composite ports.

705: The ODN apparatus separately receives upstream optical signals of the plurality of ONUs, and transmits the upstream optical signals to the OLT, where the upstream optical signals carry identification information of the ONUs that send the upstream optical signals and port identification information of the plurality of corresponding third photoelectric composite ports that transmit the upstream optical signals.

706: The OLT receives the upstream optical signal, and determines network topology information based on the upstream optical signal, where the network topology information includes a correspondence between the plurality of ONUs and the plurality of third photoelectric ports.

In embodiments of this application, the signal processing method is implemented by performing corresponding steps by the OLT, the plurality of ODN apparatuses, and the plurality of ONUs in Embodiment 1. For details, refer to related descriptions in the embodiment shown in FIG. 3. Details are not described herein again.

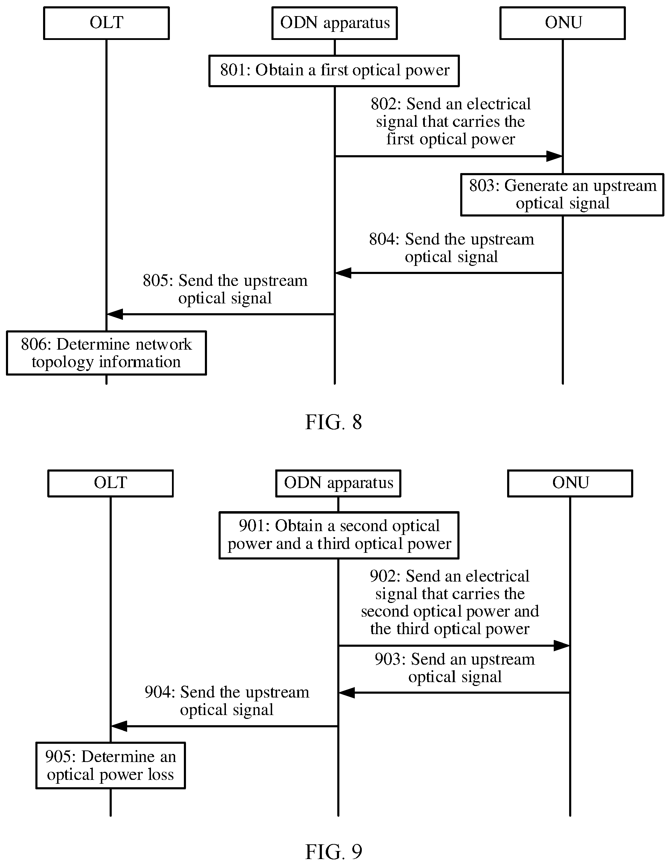

FIG. 8 shows a procedure of a signal processing method according to an embodiment of this application. As shown in FIG. 8, the procedure of the method includes the following plurality of steps.

801: An ODN apparatus determines a first optical power of a first optical signal by using a first MPD.

802: The ODN apparatus separately sends at least one electrical signal that carries the first optical power to at least one ONU of a plurality of ONUs, and correspondingly, the at least one ONU receives the electrical signal that carries the first optical power.

803: The at least one ONU generates an upstream optical signal and sends the upstream optical signal to the ODN apparatus, where the upstream optical signal carries the first optical power.

In a possible implementation, the upstream optical signal sent by the at least one ONU further carries a downstream optical power received by the at least one ONU.

804: The ODN apparatus separately receives an upstream optical signal of the at least one ONU and transmits the upstream optical signal to an OLT.

805: The ODN apparatus receives an upstream optical signal of a next-level ODN apparatus and transmits the upstream optical signal to the OLT, where the upstream optical signal carries a first optical power of the next-level ODN apparatus.

In a possible implementation, the upstream optical signal transmitted by the next-level ODN apparatus further carries downstream optical powers received by a plurality of ONUs connected to the next-level ODN apparatus.

806: The OLT determines network topology information based on the upstream optical signal of the at least one ONU and the upstream optical signal of the next-level ODN apparatus. The network topology information includes level information of a plurality of ODN apparatuses and information about levels to which the plurality of ONUs belong in a PON network.

In embodiments of this application, the signal processing method is implemented by performing corresponding steps by the OLT, the plurality of ODN apparatuses, and the plurality of ONUs in Embodiment 2. For details, refer to related descriptions in the embodiment shown in FIG. 4. Details are not described herein again.

FIG. 9 shows a procedure of a signal processing method according to an embodiment of this application. As shown in FIG. 9, the procedure of the method includes the following plurality of steps.

901: An ODN apparatus obtains a second optical power of a second optical signal and third optical powers of a plurality of third optical signals.

902: The ODN apparatus separately sends a plurality of electrical signals that carry the second optical power and the third optical powers to a plurality of ONUs.

903: The plurality of ONUs generate a plurality of upstream optical signals and transmit the plurality of upstream optical signals to the ODN apparatus, where the upstream optical signals carry a first optical power, the second optical power, the third optical powers, and downstream optical powers received by the plurality of ONUs.

904: The ODN apparatus separately receives the upstream optical signals of the plurality of corresponding ONUs and transmits the upstream optical signals to the OLT.

905: The OLT receives the plurality of upstream optical signals, and determines an optical power loss based on information carried in the upstream optical signals, where the plurality of upstream optical signals carry the first optical power, the second optical power, the third optical powers, and the downstream optical powers received by the plurality of ONUs. The optical power loss includes an optical power loss from the OLT to the ODN apparatus, optical power losses from a first optical port to a second optical port and a third photoelectric port, and optical power losses from the third photoelectric ports to the plurality of ONUs.

In embodiments of this application, the signal processing method is implemented by performing corresponding steps by the OLT, the plurality of ODN apparatuses, and the plurality of ONUs in Embodiment 2. For details, refer to related descriptions in the embodiment shown in FIG. 4. Details are not described herein again.

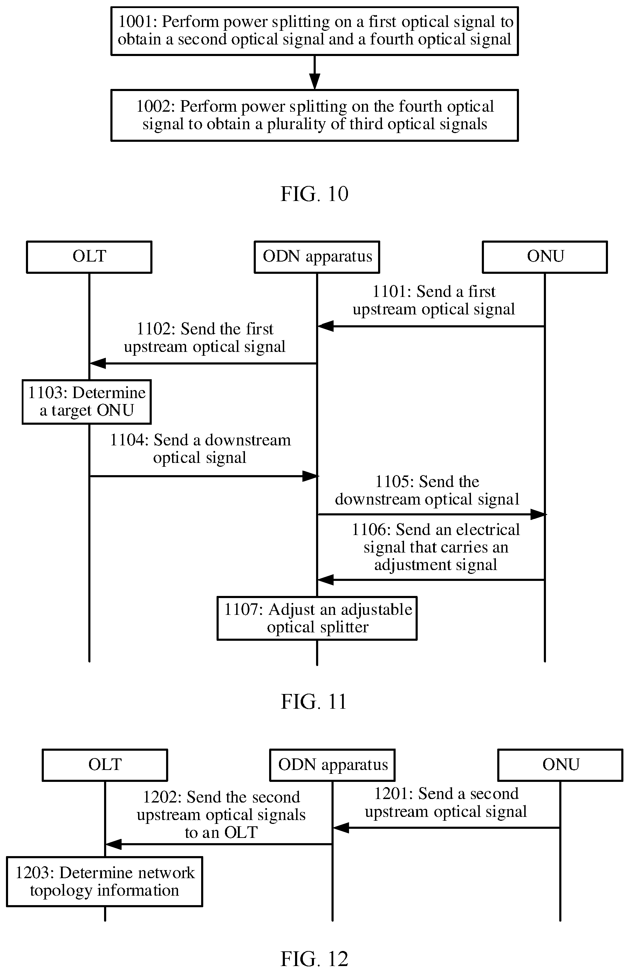

FIG. 10 shows a procedure of a signal processing method according to an embodiment of this application. The foregoing ODN apparatus includes a first optical splitter and an equal ratio optical splitter. As shown in FIG. 10, the procedure of the method includes the following plurality of steps.

1001: The ODN apparatus performs power splitting on a first optical signal to obtain a second optical signal and a fourth optical signal by using the first optical splitter.

1002: The ODN apparatus performs power splitting on the fourth optical signal to obtain a plurality of third optical signals with equal optical powers by using the equal ratio optical splitter.

In embodiments of this application, the signal processing method is implemented by performing corresponding steps by the ODN apparatus in Embodiment 3. For details, refer to corresponding functions of the ODN apparatus in Embodiment 3 shown in FIG. 6. Details are not described herein again.

FIG. 11 shows a procedure of a signal processing method according to an embodiment of this application. The first optical splitter is an optical splitter whose power splitting ratio is adjustable. As shown in FIG. 11, the procedure of the method includes the following plurality of steps.

1101: A plurality of ONUs generate first upstream optical signals, where the first upstream optical signals carry network address information of the plurality of ONUs and a plurality of first downstream optical powers received by the plurality of ONUs.

1102: An ODN apparatus receives a plurality of first upstream optical signals sent by the plurality of ONUs, and transmits the first upstream optical signals to an OLT through a first optical port.

1103: The OLT receives the plurality of first upstream optical signals transmitted by the ODN apparatus, and determines a target ONU based on the plurality of first downstream optical powers carried in the plurality of first upstream optical signals. The target ONU is an ONU corresponding to a downstream optical power with a smallest value of the plurality of first downstream optical powers.

1104: The OLT generates a downstream optical signal and sends the downstream optical signal to the ODN apparatus, where the downstream optical signal indicates the ODN apparatus to transmit the downstream optical signal to the target ONU. The downstream optical signal carries an adjustment signal, and the adjustment signal indicates the target ONU to send the adjustment signal to the ODN apparatus, to increase, by adjusting the adjustable optical splitter, an optical power of a target third optical signal output by a target third photoelectric port. The target third photoelectric port and the target third optical signal correspond to the target ONU.

1105: The ODN apparatus receives the downstream optical signal sent by the OLT, and sends the downstream optical signal to a target ONU indicated by the downstream optical signal.

1106: The target ONU receives a downstream optical signal that is transmitted by the ODN apparatus and that carries the adjustment signal, generates an electrical signal that carries the adjustment signal, and sends the electrical signal to the ODN apparatus.

1107: The ODN apparatus receives the electrical signal that is sent by the target ONU and that carries the adjustment signal, and adjusts the adjustable optical splitter according to an indication of the adjustment signal, to increase the optical power of the target third optical signal output by the target third photoelectric port. The target third photoelectric port and the target third optical signal correspond to the target ONU.

In embodiments of this application, the signal processing method is implemented by performing corresponding steps by the OLT, the plurality of ODN apparatuses, and the plurality of ONUs in Embodiment 3. For details, refer to related descriptions in Embodiment 3 shown in FIG. 6. Details are not described herein again.

FIG. 12 shows a procedure of a signal processing method according to an embodiment of this application. A first optical splitter is an optical splitter whose power splitting ratio is adjustable. After the first optical splitter increases a third optical signal output to a target ONU, as shown in FIG. 12, the procedure of the method includes the following plurality of steps.

1201: A plurality of ONUs generate a plurality of second upstream optical signals and transmit the plurality of second upstream optical signals to an ODN apparatus, where the second upstream optical signals carry network address information of the plurality of ONUs and a plurality of second downstream optical powers received by the plurality of ONUs. The second downstream optical powers are powers of downstream optical signals received by the plurality of ONUs after the ODN apparatus adjusts an optical split ratio of an adjustable optical splitter.

1202: The ODN apparatus receives the second upstream optical signals sent by the plurality of ONUs, and transmits the second upstream optical signals to an OLT.

1203: The OLT receives a second upstream optical signal that carries network address information of the plurality of ONUs and the second downstream optical powers received by the plurality of ONUs, and determines network topology information based on the first upstream optical signal and the second upstream optical signal. The network topology information further includes level information of the ODN apparatus.

In embodiments of this application, the signal processing method is implemented by performing corresponding steps by the OLT, the plurality of ODN apparatuses, and the plurality of ONUs in Embodiment 3. For details, refer to related descriptions in Embodiment 3 shown in FIG. 6. Details are not described herein again.

A person skilled in the art may clearly understand that, for the purpose of convenient and brief description, for detailed working processes of the foregoing system, apparatus, and unit, refer to corresponding processes in the foregoing method embodiments. Details are not described herein again.

In several embodiments provided in this application, it should be understood that the disclosed system, apparatus, and method may be implemented in another manner. For example, the described apparatus embodiment is merely an example. For example, division into the units is merely logical function division and may be other division during actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in an electrical, a mechanical, or another form. The units described as separate parts may or may not be physically separate, and parts displayed as units may or may not be physical units, in other words, may be located in one position, or may be distributed on a plurality of network units. Some or all of the units may be selected based on actual requirements to achieve the objectives of the solutions of embodiments.

In addition, functional units in embodiments of this application may be integrated into one processing unit, each of the units may exist alone physically, or two or more units are integrated into one unit. The integrated unit may be implemented in a form of hardware, or may be implemented in a form of a software functional unit.

When the integrated unit is implemented in the form of the software functional unit and sold or used as an independent product, the integrated unit may be stored in a computer-readable storage medium. Based on such an understanding, the technical solutions of this application essentially, or the part contributing to a conventional technology, or all or some of the technical solutions may be implemented in the form of a software product. The computer software product is stored in a storage medium and includes several instructions for instructing a computer device (which may be a personal computer, a server, or a network device) to perform all or some of the steps of the methods described in embodiments of this application. The foregoing storage medium includes any medium that can store program code, such as a USB flash drive, a removable hard disk, a read-only memory (ROM, read-only memory), a random access memory (RAM, random access memory), a magnetic disk, or an optical disc.

## Claims

1. An optical distribution network, ODN, apparatus (300), wherein the ODN apparatus comprises an optical splitting module (301), a control chip (302), a first optical port (303), a second optical port (304), and a plurality of third photoelectric composite ports (305), wherein the optical splitting module (301) is connected to the control chip (302), the first optical port (303), the second optical port (304), and the plurality of third photoelectric composite ports (305), wherein
the first optical port (303) is configured to connect to an optical line terminal, OLT;
the second optical port (304) is configured to connect to a next-level ODN apparatus;
the plurality of third photoelectric composite ports (305) are configured to connect to a plurality of optical network units, ONUs, and the third photoelectric composite port (305) is configured to transmit an optical signal and an electrical signal;
the control chip (302) is configured to control the plurality of third photoelectric composite ports (305) to separately send a plurality of electrical signals that carry port identification information to the plurality of corresponding ONUs, wherein the port identification information indicates identifiers of the plurality of third photoelectric composite ports (305);
the optical splitting module (301) is configured to perform power splitting on a first optical signal sent by the OLT to obtain a second optical signal and a plurality of third optical signals, wherein the second optical signal is transmitted to the next-level ODN apparatus, and the plurality of third optical signals are transmitted to the plurality of ONUs; and
the optical splitting module (301) is further configured to: separately receive upstream optical signals of the plurality of corresponding ONUs from the plurality of third photoelectric composite ports (305), and transmit the upstream optical signals to the OLT, wherein the upstream optical signals carry identification information of the ONUs that send the upstream optical signals and port identification information of the corresponding third photoelectric composite ports (305) that transmit the upstream optical signals.

2. The ODN apparatus (300) according to claim 1, wherein the ODN apparatus further comprises a first monitor photodiode, MPD (406), and the first MPD is connected to the first optical port (303, 403);
the first MPD (406) is configured to: obtain a first optical power of the first optical signal, and transmit the first optical power to the control chip (302, 402);
the control chip (302, 402) is further configured to control at least one third photoelectric composite port of the plurality of third photoelectric composite ports (305, 405) to send at least one electrical signal that carries the first optical power to at least one ONU of the plurality of ONUs, wherein the at least one third photoelectric composite port corresponds to the at least one ONU;
the optical splitting module (301, 401) is further configured to: receive an upstream optical signal of the at least one ONU, and transmit the upstream optical signal to the OLT, wherein the upstream optical signal of the at least one ONU carries the first optical power; and
the optical splitting module (301, 401) is further configured to: separately receive an upstream optical signal of the next-level ODN apparatus from the second optical port (304, 404), and transmit the upstream optical signal to the OLT, wherein the upstream optical signal of the next-level ODN apparatus carries a first optical power of the next-level ODN apparatus.

3. The ODN apparatus (300, 400) according to claim 2, wherein the upstream optical signal of the at least one ONU further carries a downstream optical power received by the at least one ONU, and the upstream optical signal of the next-level ODN apparatus further carries downstream optical powers received by a plurality of ONUs connected to the next-level ODN apparatus.

4. The ODN apparatus (300, 400) according to claim 3, wherein the ODN apparatus further comprises a second MPD (407) and a third MPD (408), the second MPD (407) is connected to the second optical port (304, 404), and the third MPD (408) is connected to the plurality of third photoelectric composite ports (305, 405);
the second MPD (407) is configured to: obtain a second optical power of the second optical signal, and transmit the second optical power to the control chip (302, 402);
the third MPD (408) is configured to: obtain third optical powers of the plurality of third optical signals, and transmit the third optical powers to the control chip (302, 402);
the control chip (302, 402) is further configured to control at least one third photoelectric composite port of the plurality of third photoelectric composite ports (305, 405) to send at least one electrical signal that carries the second optical power and the third optical powers to at least one ONU of the plurality of ONUs, wherein the at least one third photoelectric composite port corresponds to the at least one ONU; and
the optical splitting module (301, 401) is further configured to: receive an upstream optical signal of the at least one ONU, and transmit the upstream optical signal to the OLT, wherein the upstream optical signal carries the first optical power, the second optical power, the third optical powers, and the downstream optical powers received by the plurality of ONUs.

5. The ODN apparatus (300, 400) according to claim 4, wherein the ODN apparatus further comprises a first filter (409), a second filter (410), and a third filter (411), the first MPD (406) is connected to the optical splitting module (301, 401) through the first filter (409), the second MPD (407) is connected to the optical splitting module (301, 401) through the second (filter (410) and the third MPD (408) is connected to the optical splitting module through the third filter (411);
the first filter (409) is configured to filter an optical signal received by the first MPD (406);
the second filter (410) is configured to filter an optical signal received by the second MPD (407); and
the third filter (411) is configured to filter an optical signal received by the third MPD (408).

6. The ODN apparatus (300, 400) according to any one of claims 1 to 5, wherein the optical splitting module (301, 401) comprises a first optical splitter (606) and an equal ratio optical splitter (607), an output port of the first optical splitter (606) is connected to an input port of the equal ratio optical splitter (607), and the equal ratio optical splitter (607) is an optical splitter that performs power splitting on an input optical signal to obtain a plurality of output optical signals with equal optical powers;
the first optical splitter (606) is configured to perform power splitting on the first optical signal to obtain the second optical signal and a fourth optical signal; and
the equal ratio optical splitter (607) is configured to perform power splitting on the fourth optical signal to obtain the plurality of third optical signals.

7. The ODN apparatus (300, 400, 600) according to claim 6, wherein the first optical splitter (606) is an adjustable optical splitter.

8. A signal processing method, wherein the method comprises:
receiving, by an optical distribution network, ODN, apparatus, a first optical signal sent by an optical line terminal, OLT (701);
performing, by the ODN apparatus, power splitting on the first optical signal to obtain a second optical signal and a plurality of third optical signals (702);
transmitting, by the ODN apparatus, the second optical signal to a next-level ODN apparatus, and separately transmitting the plurality of third optical signals to a plurality of corresponding optical network units, ONUs (703);
sending, by the ODN apparatus, a plurality of electrical signals that carry port identification information to the plurality of corresponding ONUs, wherein the port identification information indicates identifiers of a plurality of third photoelectric composite ports (704); and
separately receiving, by the ODN apparatus, upstream optical signals of the plurality of ONUs, and transmitting the upstream optical signals to the OLT, wherein the upstream optical signals carry identification information of the ONUs that send the upstream optical signals and port identification information of the corresponding third photoelectric composite ports that transmit the upstream optical signals, the upstream optical signals are for determining network topology information, and the network topology information comprises a correspondence between the plurality of ONUs and the plurality of third photoelectric composite ports (705, 706).

9. The method according to claim 8, wherein the method further comprises:
obtaining, by the ODN apparatus, a first optical power of the first optical signal (801);
sending, by the ODN apparatus, at least one electrical signal that carries the first optical power to at least one ONU of the plurality of ONUs (802);
receiving, by the ODN apparatus, an upstream optical signal of the at least one ONU (804), and transmitting the upstream optical signal to the OLT (805), wherein the upstream optical signal of the at least one ONU carries the first optical power; and
receiving, by the ODN apparatus, an upstream optical signal of the next-level ODN apparatus, and transmitting the upstream optical signal to the OLT, wherein the upstream optical signal of the next-level ODN apparatus carries a first optical power of the next-level ODN apparatus, the upstream optical signal of the at least one ONU and the upstream optical signal of the next-level ODN apparatus are for determining the network topology information, and the network topology information comprises level information of the ODN apparatus and information about levels to which the plurality of ONUs belong.

10. The method according to claim 9, wherein the upstream optical signal of the at least one ONU further carries a downstream optical power received by the at least one ONU, and the upstream optical signal of the next-level ODN apparatus further carries downstream optical powers received by a plurality of ONUs connected to the next-level ODN apparatus.

11. The method according to claim 10, wherein the method further comprises:
obtaining, by the ODN apparatus, a second optical power of the second optical signal;
obtaining, by the ODN apparatus, third optical powers of the plurality of third optical signals (901);
sending, by the ODN apparatus, at least one electrical signal that carries the second optical power and the third optical powers to at least one ONU of the plurality of ONUs (902); and
receiving, by the ODN apparatus, an upstream optical signal of the at least one ONU (903), and transmitting the upstream optical signal to the OLT (904), wherein the upstream optical signal carries the first optical power, the second optical power, the third optical powers, and the downstream optical powers received by the plurality of ONUs, the upstream optical signal is for determining an optical power loss, wherein the optical power loss comprises an optical power loss from the OLT to the ODN apparatus, optical power losses from a first optical port to a second optical port and a third photoelectric composite port, and optical power losses from the third photoelectric composite ports to the plurality of ONUs (905).

12. The method according to any one of claims 8 to 11, wherein the ODN apparatus comprises a first optical splitter and an equal ratio optical splitter, and the performing, by the ODN apparatus, power splitting on the first optical signal to obtain a second optical signal and a plurality of third optical signals comprises:
performing, by the ODN apparatus, power splitting on the first optical signal to obtain the second optical signal and a fourth optical signal by using the first optical splitter; and
performing, by the ODN apparatus, power splitting on the fourth optical signal to obtain the plurality of third optical signals with equal optical powers by using the equal ratio optical splitter.

13. The method according to claim 12, wherein the first optical splitter is an optical splitter whose power splitting ratio is adjustable, and the method further comprises:
receiving, by the ODN apparatus, first upstream optical signals sent by the plurality of ONUs, and transmitting the first upstream optical signals to the OLT through the first optical port, wherein the first upstream optical signals carry network address information of the plurality of ONUs and a plurality of first downstream optical powers received by the plurality of ONUs;
receiving, by the ODN apparatus, a downstream optical signal sent by the OLT, and sending the downstream optical signal to a target ONU indicated by the downstream optical signal, wherein the downstream optical signal carries an adjustment signal, and the target ONU is an ONU that has a lowest first downstream optical power and that is of the plurality of ONUs determined by the OLT; and
receiving, by the ODN apparatus, an electrical signal that is sent by the target ONU and that carries the adjustment signal, wherein the adjustment signal indicates the ODN apparatus to adjust the adjustable optical splitter, to increase an optical power of a target third optical signal output by a target third photoelectric composite port, and the target third photoelectric composite port and the target third optical signal correspond to the target ONU.

14. The method according to claim 13, wherein the method further comprises:
receiving, by the ODN apparatus, second upstream optical signals sent by the plurality of ONUs, and transmitting the second upstream optical signals to the OLT, wherein the second upstream optical signals carry the network address information of the plurality of ONUs and second downstream optical powers received by the plurality of ONUs, the first upstream optical signal and the second upstream optical signal are for determining the network topology information, wherein the network topology information further comprises the level information of the ODN apparatus.

15. A passive optical network, PON, network system, wherein the PON network system comprises the ODN apparatus, the plurality of ONUs, the OLT, and the next-level ODN apparatus according to any one of claims 1 to 7, wherein the OLT is connected to the first optical port of the ODN apparatus, the plurality of ONUs are connected to the plurality of third photoelectric composite ports of the ODN apparatus, and the next-level ODN apparatus is connected to the second optical port of the ODN apparatus.

## Patentansprüche

1. Optische Verteilnetzeinrichtung, ODN-Einrichtung, (300), wobei die ODN-Einrichtung ein optisches Splittingmodul (301), einen Steuerchip (302), einen ersten optischen Anschluss (303), einen zweiten optischen Anschluss (304) und eine Vielzahl von dritten fotoelektrischen Verbundanschlüssen (305) umfasst, wobei das optische Splittingmodul (301) mit dem Steuerchip (302), dem ersten optischen Anschluss (303), dem zweiten optischen Anschluss (304) und der Vielzahl von dritten fotoelektrischen Verbundanschlüssen (305) verbunden ist, wobei
der erste optische Anschluss (303) dazu konfiguriert ist, sich mit einem optischen Leitungsendgerät, OLT, zu verbinden;
der zweite optische Anschluss (304) dazu konfiguriert ist, sich mit einer ODN-Einrichtung der nächsten Ebene zu verbinden;
die Vielzahl von dritten fotoelektrischen Verbundanschlüssen (305) dazu konfiguriert ist, sich mit einer Vielzahl von optischen Netzwerkeinheiten, ONUs, zu verbinden, und der dritte fotoelektrische Verbundanschluss (305) dazu konfiguriert ist, ein optisches Signal und ein elektrisches Signal zu übertragen;
der Steuerchip (302) dazu konfiguriert ist, die Vielzahl von dritten fotoelektrischen Verbundanschlüssen (305) dazu zu steuern, separat eine Vielzahl von elektrischen Signalen, die Anschlussidentifikationsinformationen enthalten, an die Vielzahl von entsprechenden ONUs zu senden, wobei die Anschlussidentifikationsinformationen Kennungen der Vielzahl von dritten fotoelektrischen Verbundanschlüssen (305) anzeigen;
das optische Splittingmodul (301) dazu konfiguriert ist, ein Leistungs-Splitting an einem ersten optischen Signal, das durch das OLT gesendet wird, durchzuführen, um ein zweites optisches Signal und eine Vielzahl von dritten optischen Signalen zu erlangen, wobei das zweite optische Signal an die ODN-Einrichtung der nächsten Ebene übertragen wird und die Vielzahl von dritten optischen Signalen an die Vielzahl von ONUs übertragen wird; und
das optische Splittingmodul (301) ferner zu Folgendem konfiguriert ist: separates Empfangen vorgelagerter optischer Signale der Vielzahl von entsprechenden ONUs aus der Vielzahl von dritten fotoelektrischen Verbundanschlüssen (305) und Übertragen der vorgelagerten optischen Signale an das OLT, wobei die vorgelagerten optischen Signale Identifikationsinformationen der ONUs, welche die vorgelagerten optischen Signale senden, und Anschlussidentifikationsinformationen der entsprechenden dritten fotoelektrischen Verbundanschlüsse (305), welche die vorgelagerten optischen Signale übertragen, enthalten.

2. ODN-Einrichtung (300) nach Anspruch 1, wobei die ODN-Einrichtung ferner eine erste Monitorfotodiode, MPD, (406) umfasst und die erste MPD mit dem ersten optischen Anschluss (303, 403) verbunden ist;
die erste MPD (406) zu Folgendem konfiguriert ist: Erlangen einer ersten optischen Leistung des ersten optischen Signals und Übertragen der ersten optischen Leistung an den Steuerchip (302, 402);
der Steuerchip (302, 402) ferner dazu konfiguriert ist, mindestens einen dritten fotoelektrischen Verbundanschluss der Vielzahl von dritten fotoelektrischen Verbundanschlüssen (305, 405) dazu zu steuern, mindestens ein elektrisches Signal, das die erste optische Leistung enthält, an mindestens eine ONU der Vielzahl von ONUs zu senden, wobei der mindestens eine dritte fotoelektrische Verbundanschluss der mindestens einen ONU entspricht;
das optische Splittingmodul (301, 401) ferner zu Folgendem konfiguriert ist: Empfangen eines vorgelagerten optischen Signals der mindestens einen ONU und Übertragen des vorgelagerten optischen Signals an das OLT, wobei das vorgelagerte optische Signal der mindestens einen ONU die erste optische Leistung enthält; und
das optische Splittingmodul (301, 401) ferner zu Folgendem konfiguriert ist: separates Empfangen eines vorgelagerten optischen Signals der ODN-Einrichtung der nächsten Ebene von dem zweiten optischen Anschluss (304, 404), und Übertragen des vorgelagerten optischen Signals an das OLT, wobei das vorgelagerte optische Signal der ODN-Einrichtung der nächsten Ebene eine erste optische Leistung der ODN-Einrichtung der nächsten Ebene enthält.

3. ODN-Einrichtung (300, 400) nach Anspruch 2, wobei das vorgelagerte optische Signal der mindestens einen ONU ferner eine nachgelagerte optische Leistung enthält, die durch die mindestens eine ONU empfangen wird, und das vorgelagerte optische Signal der ODN-Einrichtung der nächsten Ebene ferner nachgelagerte optische Leistungen enthält, die durch eine Vielzahl von ONUs empfangen werden, die mit der ODN-Einrichtung der nächsten Ebene verbunden sind.

4. ODN-Einrichtung (300, 400) nach Anspruch 3, wobei die ODN-Einrichtung ferner eine zweite MPD (407) und eine dritte MPD (408) umfasst, die zweite MPD (407) mit dem zweiten optischen Anschluss (304, 404) verbunden ist und die dritte MPD (408) mit der Vielzahl von dritten fotoelektrischen Verbundanschlüssen (305, 405) verbunden ist;
die zweite MPD (407) zu Folgendem konfiguriert ist: Erlangen einer zweiten optischen Leistung des zweiten optischen Signals und Übertragen der zweiten optischen Leistung an den Steuerchip (302, 402);
die dritte MPD (408) zu Folgendem konfiguriert ist: Erlangen dritter optischer Leistungen der Vielzahl von dritten optischen Signalen und Übertragen der dritten optischen Leistungen an den Steuerchip (302, 402);
der Steuerchip (302, 402) ferner dazu konfiguriert ist, mindestens einen dritten fotoelektrischen Verbundanschluss der Vielzahl von dritten fotoelektrischen Verbundanschlüssen (305, 405) dazu zu steuern, mindestens ein elektrisches Signal zu senden, das die zweite optische Leistung und die dritten optischen Leistungen zu mindestens einer ONU der Vielzahl von ONUs enthält, wobei der mindestens eine dritte fotoelektrische Verbundanschluss der mindestens einen ONU entspricht; und
das optische Splittingmodul (301, 401) ferner zu Folgendem konfiguriert ist: Empfangen eines vorgelagerten optischen Signals der mindestens einen ONU und Übertragen des vorgelagerten optischen Signals an das OLT, wobei das vorgelagerte optische Signal die erste optische Leistung, die zweite optische Leistung, die dritten optischen Leistungen und die nachgelagerten optischen Leistungen, die durch die Vielzahl von ONUs empfangen werden, enthält.

5. ODN-Einrichtung (300, 400) nach Anspruch 4, wobei die ODN-Einrichtung ferner einen ersten Filter (409), einen zweiten Filter (410) und einen dritten Filter (411) umfasst, die erste MPD (406) über den ersten Filter (409) mit dem optischen Splittingmodul (301, 401) verbunden ist, die zweite MPD (407) über den zweiten Filter (410) mit dem optischen Splittingmodul (301, 401) verbunden ist und die dritte MPD (408) über den dritten Filter (411) mit dem optischen Splittingmodul verbunden ist;
der erste Filter (409) dazu konfiguriert ist, ein optisches Signal, das durch die erste MPD (406) empfangen wird, zu filtern;
der zweite Filter (410) dazu konfiguriert ist, ein optisches Signal, das durch die zweite MPD (407) empfangen wird, zu filtern; und
der dritte Filter (411) dazu konfiguriert ist, ein optisches Signal, das durch die dritte MPD (408) empfangen wird, zu filtern.

6. ODN-Einrichtung (300, 400) nach einem der Ansprüche 1 bis 5, wobei das optische Splittingmodul (301, 401) einen ersten optischen Splitter (606) und einen optischen Splitter (607) mit gleichem Verhältnis umfasst, ein Ausgangsanschluss des ersten optischen Splitters (606) mit einem Eingangsanschluss des optischen Splitters (607) mit gleichem Verhältnis verbunden ist und der optische Splitter (607) mit gleichem Verhältnis ein optischer Splitter ist, der ein Leistungs-Splitting an einem optischen Eingangssignal durchführt, um eine Vielzahl von optischen Ausgangssignalen mit gleichen optischen Leistungen zu erlangen;
der erste optische Splitter (606) dazu konfiguriert ist, ein Leistungs-Splitting an dem ersten optischen Signal durchzuführen, um das zweite optische Signal und ein viertes optisches Signal zu erlangen; und
der optische Splitter (607) mit gleichem Verhältnis dazu konfiguriert ist, ein Leistungs-Splitting an dem vierten optischen Signal durchzuführen, um die Vielzahl von dritten optischen Signalen zu erlangen.

7. ODN-Einrichtung (300, 400, 600) nach Anspruch 6, wobei der erste optische Splitter (606) ein anpassbarer optischer Splitter ist.

8. Signalverarbeitungsverfahren, wobei das Verfahren Folgendes umfasst:
Empfangen, durch eine optische Verteilnetzeinrichtung, ODN-Einrichtung, eines ersten optischen Signals, das durch ein optisches Leitungsendgerät, OLT, (701) gesendet wird;
Durchführen, durch die ODN-Einrichtung, eines Leistungs-Splittings an dem ersten optischen Signal, um ein zweites optisches Signal und eine Vielzahl von dritten optischen Signalen (702) zu erlangen;
Übertragen, durch die ODN-Einrichtung, des zweiten optischen Signals an eine ODN-Einrichtung der nächsten Ebene und separates Übertragen der Vielzahl von dritten optischen Signalen an eine Vielzahl von entsprechenden optischen Netzwerkeinheiten, ONUs, (703);
Senden, durch die ODN-Einrichtung, einer Vielzahl von elektrischen Signalen, die Anschlussidentifikationsinformationen enthalten, an die Vielzahl von entsprechenden ONUs, wobei die Anschlussidentifikationsinformationen Kennungen einer Vielzahl von dritten fotoelektrischen Verbundanschlüssen (704) anzeigen; und
separates Empfangen, durch die ODN-Einrichtung, vorgelagerter optischer Signale der Vielzahl von ONUs und Übertragen der vorgelagerten optischen Signale an das OLT, wobei die vorgelagerten optischen Signale Identifikationsinformationen der ONUs, welche die vorgelagerten optischen Signale senden, und Anschlussidentifikationsinformationen der entsprechenden dritten fotoelektrischen Verbundanschlüsse, welche die vorgelagerten optischen Signale übertragen, enthalten, wobei die vorgelagerten optischen Signale dazu dienen, Netzwerktopologieinformationen zu bestimmen, und die Netzwerktopologieinformationen eine Entsprechung zwischen der Vielzahl von ONUs und der Vielzahl von dritten fotoelektrischen Verbundanschlüssen (705, 706) umfasst.

9. Verfahren nach Anspruch 8, wobei das Verfahren ferner Folgendes umfasst:
Erlangen, durch die ODN-Einrichtung, einer ersten optischen Leistung des ersten optischen Signals (801);
Senden, durch die ODN-Einrichtung, mindestens eines elektrischen Signals, das die erste optische Leistung enthält, an mindestens eine ONU der Vielzahl von ONUs (802);
Empfangen, durch die ODN-Einrichtung, eines vorgelagerten optischen Signals der mindestens einen ONU (804) und Übertragen des vorgelagerten optischen Signals an das OLT (805), wobei das vorgelagerte optische Signal der mindestens einen ONU die erste optische Leistung enthält; und
Empfangen, durch die ODN-Einrichtung, eines vorgelagerten optischen Signals der ODN-Einrichtung der nächsten Ebene und Übertragen des vorgelagerten optischen Signals an das OLT, wobei das vorgelagerte optische Signal der ODN-Einrichtung der nächsten Ebene eine erste optische Leistung der ODN-Einrichtung der nächsten Ebene enthält, das vorgelagerte optische Signal der mindestens einen ONU und das vorgelagerte optische Signal der ODN-Einrichtung der nächsten Ebene zum Bestimmen der Netzwerktopologieinformationen dienen und die Netzwerktopologieinformationen Ebeneninformationen der ODN-Einrichtung und Information über Ebenen, zu denen die Vielzahl von ONUs gehört, umfassen.

10. Verfahren nach Anspruch 9, wobei das vorgelagerte optische Signal der mindestens einen ONU ferner eine nachgelagerte optische Leistung enthält, die durch die mindestens eine ONU empfangen wird, und das vorgelagerte optische Signal der ODN-Einrichtung der nächsten Ebene ferner nachgelagerte optische Leistungen enthält, die durch eine Vielzahl von ONUs empfangen werden, die mit der ODN-Einrichtung der nächsten Ebene verbunden sind.

11. Verfahren nach Anspruch 10, wobei das Verfahren ferner Folgendes umfasst:
Erlangen, durch die ODN-Einrichtung, einer zweiten optischen Leistung des zweiten optischen Signals;
Erlangen, durch die ODN-Einrichtung, dritter optischer Leistungen der Vielzahl von dritten optischen Signalen (901);
Senden, durch die ODN-Einrichtung, mindestens eines elektrischen Signals, das die zweite optische Leistung und die dritten optischen Leistungen enthält, an mindestens eine ONU der Vielzahl von ONUs (902); und
Empfangen, durch die ODN-Einrichtung, eines vorgelagerten optischen Signals der mindestens einen ONU (903) und Übertragen des vorgelagerten optischen Signals an das OLT (904), wobei das vorgelagerte optische Signal die erste optische Leistung, die zweite optische Leistung und die dritten optische Leistungen und die nachgelagerten optischen Leistungen, die durch die Vielzahl von ONUs empfangen werden, enthält, wobei das vorgelagerte optische Signal zum Bestimmen eines optischen Leistungsverlusts dient, wobei der optische Leistungsverlust einen optischen Leistungsverlust von dem OLT zu der ODN-Einrichtung, optische Leistungsverluste von einem ersten optischen Anschluss zu einem zweiten optischen Anschluss und einem dritten fotoelektrischen Verbundanschluss und optische Leistungsverluste von den dritten fotoelektrischen Verbundanschlüssen zu der Vielzahl von ONUs (905) umfasst.

12. Verfahren nach einem der Ansprüche 8 bis 11, wobei die ODN-Einrichtung einen ersten optischen Splitter und einen optischen Splitter mit gleichem Verhältnis umfasst und das Durchführen, durch die ODN-Einrichtung, des Leistungs-Splittings an dem ersten optischen Signal, um ein zweites optisches Signal und eine Vielzahl von dritten optischen Signalen zu erlangen, Folgendes umfasst:
Durchführen, durch die ODN-Einrichtung, eines Leistungs-Splittings an dem ersten optischen Signal, um unter Verwendung des ersten optischen Splitters das zweite optische Signal und ein viertes optisches Signal zu erlangen; und
Durchführen, durch die ODN-Einrichtung, eines Leistungs-Splittings an dem vierten optischen Signal, um unter Verwendung des optischen Splitters mit gleichem Verhältnis die Vielzahl von dritten optischen Signalen mit gleichen optischen Leistungen zu erlangen.

13. Verfahren nach Anspruch 12, wobei der erste optische Splitter ein optischer Splitter ist, dessen Leistungs-Splittingverhältnis anpassbar ist, und wobei das Verfahren ferner Folgendes umfasst:
Empfangen, durch die ODN-Einrichtung, erster vorgelagerter optischer Signale, die durch die Vielzahl von ONUs gesendet werden, und Übertragen der ersten vorgelagerten optischen Signale an das OLT über den ersten optischen Anschluss, wobei die ersten vorgelagerten optischen Signale Netzwerkadressinformationen der Vielzahl von ONUs und einer Vielzahl von ersten nachgelagerten optischen Leistungen, die durch die Vielzahl von ONUs empfangen werden, enthalten;
Empfangen, durch die ODN-Einrichtung, eines nachgelagerten optischen Signals, das durch das OLT gesendet wird, und Senden des nachgelagerten optischen Signals an eine Ziel-ONU, die durch das nachgelagerte optische Signal angezeigt wird, wobei das nachgelagerte optische Signal ein Anpassungssignal enthält und die Ziel-ONU eine ONU ist, die eine niedrigste erste nachgelagerte optische Leistung aufweist und die zu der Vielzahl von ONUs gehört, die durch das OLT bestimmt werden; und
Empfangen, durch die ODN-Einrichtung, eines elektrisches Signals, das durch die Ziel-ONU gesendet wird und welches das Anpassungssignal enthält, wobei das Anpassungssignal der ODN-Einrichtung anzeigt, dass der anpassbare optische Splitter anzupassen ist, um eine optische Leistung eines dritten optischen Zielsignals, das durch einen dritten fotoelektrischen Ziel-Verbundanschluss ausgegeben wird, zu verstärken und wobei der dritte fotoelektrische Ziel-Verbundanschluss und das dritte optische Zielsignal der Ziel-ONU entsprechen.

14. Verfahren nach Anspruch 13, wobei das Verfahren ferner Folgendes umfasst:
Empfangen, durch die ODN-Einrichtung, zweiter vorgelagerter optischer Signale, die durch die Vielzahl von ONUs gesendet werden, und Übertragen der zweiten vorgelagerten optischen Signale an das OLT, wobei die zweiten vorgelagerten optischen Signale die Netzwerkadressinformationen der Vielzahl von ONUs und zweite nachgelagerte optische Leistungen, die durch die Vielzahl von ONUs empfangen werden, enthalten, wobei das erste vorgelagerte optische Signal und das zweite vorgelagerte optische Signal zum Bestimmen der Netzwerktopologieinformationen dienen, wobei die Netzwerktopologieinformationen ferner die Ebeneninformationen der ODN-Einrichtung umfassen.

15. Passives optisches Netzwerk-Netzwerksystem, PON-Netzwerksystem, wobei das PON-Netzwerksystem die ODN-Einrichtung, die Vielzahl von ONUs, das OLT und die ODN-Einrichtung der nächsten Ebene gemäß einem der Ansprüche 1 bis 7 umfasst, wobei das OLT mit dem ersten optischen Anschluss der ODN-Einrichtung verbunden ist, die Vielzahl von ONUs mit der Vielzahl von dritten fotoelektrischen Verbundanschlüssen der ODN-Einrichtung verbunden ist und die ODN-Einrichtung der nächsten Ebene mit dem zweiten optischen Anschluss der ODN-Einrichtung verbunden ist.

## Revendications

1. Appareil de réseau de distribution optique, ODN, (300), dans lequel l'appareil ODN comprend un module de séparation optique (301), une puce de commande (302), un premier port optique (303), un second port optique (304), et une pluralité de troisièmes ports composites photoélectriques (305), dans lequel le module de séparation optique (301) est connecté à la puce de commande (302), au premier port optique (303), au second port optique (304), et à la pluralité de troisièmes ports composites photoélectriques (305), dans lequel
le premier port optique (303) est configuré pour se connecter à un terminal de ligne optique, OLT ;
le second port optique (304) est configuré pour se connecter à un appareil ODN de niveau supérieur ;
la pluralité de troisièmes ports composites photoélectriques (305) sont configurés pour se connecter à une pluralité d'unités de réseau optique, ONU, et le troisième port composite photoélectrique (305) est configuré pour transmettre un signal optique et un signal électrique ;
la puce de commande (302) est configurée pour commander la pluralité de troisièmes ports composites photoélectriques (305) pour envoyer séparément une pluralité de signaux électriques qui transportent des informations d'identification de port à la pluralité d'ONU correspondantes, dans lequel les informations d'identification de port indiquent des identifiants de la pluralité de troisièmes ports composites photoélectriques (305) ;
le module de séparation optique (301) est configuré pour réaliser une séparation de puissance sur un premier signal optique envoyé par l'OLT pour obtenir un deuxième signal optique et une pluralité de troisièmes signaux optiques, dans lequel le deuxième signal optique est transmis à l'appareil ODN de niveau supérieur, et la pluralité de troisièmes signaux optiques sont transmis à la pluralité d'ONU ; et
le module de séparation optique (301) est également configuré pour : recevoir séparément des signaux optiques en amont de la pluralité d'ONU correspondantes à partir de la pluralité de troisièmes ports composites photoélectriques (305), et transmettre les signaux optiques en amont à l'OLT, dans lequel les signaux optiques en amont transportent des informations d'identification des ONU qui envoient les signaux optiques en amont et des informations d'identification de port des troisièmes ports composites photoélectriques correspondants (305) qui transmettent les signaux optiques en amont.

2. Appareil ODN (300) selon la revendication 1, dans lequel l'appareil ODN comprend également une première photodiode de surveillance, MPD (406), et la première MPD est connectée au premier port optique (303, 403) ;
le premier MPD (406) est configuré pour : obtenir une première puissance optique du premier signal optique, et transmettre la première puissance optique à la puce de commande (302, 402) ; la puce de commande (302, 402) est également configurée pour commander au moins un troisième port composite photoélectrique de la pluralité de troisièmes ports composites photoélectriques (305, 405) pour envoyer au moins un signal électrique qui transporte la première puissance optique à au moins une ONU de la pluralité d'ONU, dans lequel l'au moins un troisième port composite photoélectrique correspond à l'au moins une ONU ;
le module de séparation optique (301, 401) est également configuré pour : recevoir un signal optique en amont de l'au moins une ONU, et transmettre le signal optique en amont à l'OLT, dans lequel le signal optique en amont de l'au moins une ONU transporte la première puissance optique ; et
le module de séparation optique (301, 401) est également configuré pour : recevoir séparément un signal optique en amont de l'appareil ODN de niveau supérieur à partir du second port optique (304, 404), et transmettre le signal optique en amont à l'OLT, dans lequel le signal optique en amont de l'appareil ODN de niveau supérieur transporte une première puissance optique de l'appareil ODN de niveau supérieur.

3. Appareil ODN (300, 400) selon la revendication 2, dans lequel le signal optique en amont de l'au moins une ONU transporte également une puissance optique en aval reçue par l'au moins une ONU, et le signal optique en amont de l'appareil ODN de niveau supérieur transporte également des puissances optiques en aval reçues par une pluralité d'ONU connectées à l'appareil ODN de niveau supérieur.

4. Appareil ODN (300, 400) selon la revendication 3, dans lequel l'appareil ODN comprend également un deuxième MPD (407) et un troisième MPD (408), le deuxième MPD (407) est connecté au second port optique (304, 404), et le troisième MPD (408) est connecté à la pluralité de troisièmes ports composites photoélectriques (305, 405) ;
le deuxième MPD (407) est configuré pour : obtenir une deuxième puissance optique du deuxième signal optique, et transmettre la deuxième puissance optique à la puce de commande (302, 402) ; le troisième MPD (408) est configuré pour : obtenir de troisièmes puissances optiques de la pluralité de troisièmes signaux optiques, et transmettre les troisièmes puissances optiques à la puce de commande (302, 402) ;
la puce de commande (302, 402) est également configurée pour commander au moins un troisième port composite photoélectrique de la pluralité de troisièmes ports composites photoélectriques (305, 405) pour envoyer au moins un signal électrique qui transporte la deuxième puissance optique et les troisièmes puissances optiques à au moins une ONU de la pluralité d'ONU, dans lequel l'au moins un troisième port composite photoélectrique correspond à l'au moins une ONU ; et
le module de séparation optique (301, 401) est également configuré pour : recevoir un signal optique en amont de l'au moins une ONU, et transmettre le signal optique en amont à l'OLT, dans lequel le signal optique en amont transporte la première puissance optique, la deuxième puissance optique, les troisièmes puissances optiques, et les puissances optiques en aval reçues par la pluralité d'ONU.

5. Appareil ODN (300, 400) selon la revendication 4, dans lequel l'appareil ODN comprend également un premier filtre (409), un deuxième filtre (410), et un troisième filtre (411), le premier MPD (406) est connecté au module de séparation optique (301, 401) à travers le premier filtre (409), le deuxième MPD (407) est connecté au module de séparation optique (301, 401) à travers le deuxième filtre (410) et le troisième MPD (408) est connecté au module de séparation optique à travers le troisième filtre (411) ;
le premier filtre (409) est configuré pour filtrer un signal optique reçu par le premier MPD (406) ;
le deuxième filtre (410) est configuré pour filtrer un signal optique reçu par le deuxième MPD (407) ; et
le troisième filtre (411) est configuré pour filtrer un signal optique reçu par le troisième MPD (408).

6. Appareil ODN (300, 400) selon l'une quelconque des revendications 1 à 5, dans lequel le module de séparation optique (301, 401) comprend un premier séparateur optique (606) et un séparateur optique à rapport égal (607), un port de sortie du premier séparateur optique (606) est connecté à un port d'entrée du séparateur optique à rapport égal (607), et le séparateur optique à rapport égal (607) est un séparateur optique qui réalise une séparation de puissance sur un signal optique d'entrée pour obtenir une pluralité de signaux optiques de sortie avec des puissances optiques égales ;
le premier séparateur optique (606) est configuré pour réaliser une séparation de puissance sur le premier signal optique pour obtenir le deuxième signal optique et un quatrième signal optique ; et
le séparateur optique à rapport égal (607) est configuré pour réaliser une séparation de puissance sur le quatrième signal optique pour obtenir la pluralité de troisièmes signaux optiques.

7. Appareil ODN (300, 400, 600) selon la revendication 6, dans lequel le premier séparateur optique (606) est un séparateur optique réglable.

8. Procédé de traitement de signal, dans lequel le procédé comprend :
la réception, par un appareil de réseau de distribution optique, ODN, d'un premier signal optique envoyé par un terminal de ligne optique, OLT (701) ;
la réalisation, par l'appareil ODN, d'une séparation de puissance sur le premier signal optique pour obtenir un deuxième signal optique et une pluralité de troisièmes signaux optiques (702) ;
la transmission, par l'appareil ODN, du deuxième signal optique à un appareil ODN de niveau supérieur, et la transmission séparée de la pluralité de troisièmes signaux optiques à une pluralité d'unités de réseau optique correspondantes, ONU (703) ;
l'envoi, par l'appareil ODN, d'une pluralité de signaux électriques qui transportent des informations d'identification de port à la pluralité d'ONU correspondantes, dans lequel les informations d'identification de port indiquent des identifiants d'une pluralité de troisièmes ports composites photoélectriques (704) ; et
la réception séparée, par l'appareil ODN, de signaux optiques en amont de la pluralité d'ONU, et la transmission des signaux optiques en amont à l'OLT, dans lequel les signaux optiques en amont transportent des informations d'identification des ONU qui envoient les signaux optiques en amont et des informations d'identification de port des troisièmes ports composites photoélectriques correspondants qui transmettent les signaux optiques en amont, les signaux optiques en amont servent à déterminer les informations de topologie de réseau, et les informations de topologie de réseau comprennent une correspondance entre la pluralité d'ONU et la pluralité de troisièmes ports composites photoélectriques (705, 706).

9. Procédé selon la revendication 8, dans lequel le procédé comprend également :
l'obtention, par l'appareil ODN, d'une première puissance optique du premier signal optique (801) ;
l'envoi, par l'appareil ODN, d'au moins un signal électrique qui transporte la première puissance optique vers au moins une ONU de la pluralité d'ONU (802) ;
la réception, par l'appareil ODN, d'un signal optique en amont de l'au moins une ONU (804), et la transmission du signal optique en amont à l'OLT (805), dans lequel le signal optique en amont de l'au moins une ONU transporte la première puissance optique ; et
la réception, par l'appareil ODN, d'un signal optique en amont de l'appareil ODN de niveau supérieur, et la transmission du signal optique en amont à l'OLT, dans lequel le signal optique en amont de l'appareil ODN de niveau supérieur transporte une première puissance optique de l'appareil ODN de niveau supérieur, le signal optique en amont de l'au moins une ONU et le signal optique en amont de l'appareil ODN de niveau supérieur servent à déterminer les informations de topologie de réseau, et les informations de topologie de réseau comprennent des informations de niveau de l'appareil ODN et des informations relatives aux niveaux auxquels la pluralité d'ONU appartiennent.

10. Procédé selon la revendication 9, dans lequel le signal optique en amont de l'au moins une ONU transporte également une puissance optique en aval reçue par l'au moins une ONU, et le signal optique en amont de l'appareil ODN de niveau supérieur transporte également des puissances optiques en aval reçues par une pluralité d'ONU connectées à l'appareil ODN de niveau supérieur.

11. Procédé selon la revendication 10, dans lequel le procédé comprend également :
l'obtention, par l'appareil ODN, d'une deuxième puissance optique du deuxième signal optique ;
l'obtention, par l'appareil ODN, de troisièmes puissances optiques de la pluralité de troisièmes signaux optiques (901) ;
l'envoi, par l'appareil ODN, d'au moins un signal électrique qui transporte la deuxième puissance optique et les troisièmes puissances optiques à au moins une ONU de la pluralité d'ONU (902) ; et
la réception, par l'appareil ODN, d'un signal optique en amont de l'au moins une ONU (903), et la transmission du signal optique en amont à l'OLT (904), dans lequel le signal optique en amont transporte la première puissance optique, la deuxième puissance optique, les troisièmes puissances optiques, et les puissances optiques en aval reçues par la pluralité d'ONU, le signal optique en amont sert à déterminer une perte de puissance optique, dans lequel la perte de puissance optique comprend une perte de puissance optique de l'OLT vers l'appareil ODN, des pertes de puissance optique d'un premier port optique vers un second port optique et un troisième port composite photoélectrique, et des pertes de puissance optique des troisièmes ports composites photoélectriques vers la pluralité d'ONU (905).

12. Procédé selon l'une quelconque des revendications 8 à 11, dans lequel l'appareil ODN comprend un premier séparateur optique et un séparateur optique à rapport égal, et la réalisation, par l'appareil ODN, d'une séparation de puissance sur le premier signal optique pour obtenir un deuxième signal optique et une pluralité de troisièmes signaux optiques comprennent :
la réalisation, par l'appareil ODN, d'une séparation de puissance sur le premier signal optique pour obtenir le deuxième signal optique et un quatrième signal optique à l'aide du premier séparateur optique ; et
la réalisation, par l'appareil ODN, d'une séparation de puissance sur le quatrième signal optique pour obtenir la pluralité de troisièmes signaux optiques avec des puissances optiques égales à l'aide du séparateur optique à rapport égal.

13. Procédé selon la revendication 12, dans lequel le premier séparateur optique est un séparateur optique dont le rapport de séparation de puissance est réglable, et le procédé comprend également :
la réception, par l'appareil ODN, de premiers signaux optiques en amont envoyés par la pluralité d'ONU, et la transmission des premiers signaux optiques en amont à l'OLT via le premier port optique, dans lequel les premiers signaux optiques en amont transportent des informations d'adresse réseau de la pluralité d'ONU et une pluralité de premières puissances optiques en aval reçues par la pluralité d'ONU ;
la réception, par l'appareil ODN, d'un signal optique en aval envoyé par l'OLT, et l'envoi du signal optique en aval à une ONU cible indiquée par le signal optique en aval, dans lequel le signal optique en aval transporte un signal de réglage, et l'ONU cible est une ONU qui a une première puissance optique en aval la plus faible et qui est de la pluralité d'ONU déterminées par l'OLT ; et
la réception, par l'appareil ODN, d'un signal électrique qui est envoyé par l'ONU cible et qui transporte le signal de réglage, dans lequel le signal de réglage indique à l'appareil ODN de régler le séparateur optique réglable, pour augmenter une puissance optique d'un troisième signal optique cible émis par un troisième port composite photoélectrique cible, et le troisième port composite photoélectrique cible et le troisième signal optique cible correspondent à l'ONU cible.

14. Procédé selon la revendication 13, dans lequel le procédé comprend également :
la réception, par l'appareil ODN, de deuxièmes signaux optiques en amont envoyés par la pluralité d'ONU, et la transmission des deuxièmes signaux optique en amont à l'OLT, dans lequel les deuxièmes signaux optiques en amont transportent les informations d'adresse réseau de la pluralité d'ONU et les deuxièmes puissances optiques en aval reçues par la pluralité d'ONU, le premier signal optique en amont et le deuxième signal optique en amont servent à déterminer les informations de topologie de réseau, dans lequel les informations de topologie de réseau comprennent également les informations de niveau de l'appareil ODN.

15. Système de réseau de réseau optique passif, PON, dans lequel le système de réseau PON comprend l'appareil ODN, la pluralité d'ONU, l'OLT, et l'appareil ODN de niveau supérieur selon l'une quelconque des revendications 1 à 7, dans lequel l'OLT est connecté au premier port optique de l'appareil ODN, la pluralité d'ONU sont connectées à la pluralité de troisièmes ports composites photoélectriques de l'appareil ODN, et l'appareil ODN de niveau supérieur est connecté au second port optique de l'appareil ODN.
